# EUROPEAN PATENT APPLICATION

(11) **EP 4 793 042 A1**
(43) Date of publication of application: **19.08.2026**
(21) Application number: 26154866.3
(22) Date of filing: 29.01.2026
(51) Int. Cl.: B41F 16/00, B41F 16/02, B41F 19/00, B41J 2/00, B41J 2/50

(54) **INKJET DTF PRINTER SYSTEM AND IMAGE FORMING METHOD**

(30) Priority: 14.02.2025 JP 2025022259
(71) Applicant: Ricoh Company, Ltd., Tokyo 143-8555 (JP)
(72) Inventor: Hirano, Masanori, Tokyo, 143-8555 (JP)
(74) Representative: SSM Sandmair

(57) **Abstract**

An inkjet direct to film (DTF) printer system 100 for producing a thermal transfer film original by forming an image by discharging ink onto a thermal transfer film 120 and forming an adhesive layer 127 on the image includes a liquid discharger 10 to discharge the ink onto the thermal transfer film 120, a dispenser unit 20 which is a non-inkjet type, including a coating nozzle 31 to discharge an adhesive liquid, and to apply the adhesive liquid on the image by discharging the adhesive liquid from the coating nozzle 31, a first carriage 40 to move the liquid discharger 10, a second carriage 50 to move the dispenser unit 20, a conveyor 110 to convey the thermal transfer film 120, and a control unit 200 to control operations of the liquid discharger 10, the dispenser unit 20, the first carriage 40, the second carriage 50, and the conveyor 110, wherein the control unit is to form the adhesive layer 127 by controlling the conveyor 110 to perform a line feed.

## Description

### BACKGROUND OF THE INVENTION

### 1. Field of the Invention

The disclosures herein generally relate to inkjet DTF printer systems and image forming methods.

### 2. Description of the Related Art

For example, there is known a transfer medium manufacturing apparatus including an ink discharger for discharging ink to a release sheet, a coating unit for applying an adhesive liquid onto the release sheet, and a control unit for controlling so that the ink discharge and the application of the adhesive liquid are performed by a wet-on-wet method using an inkjet head (see, e.g., Patent document 1).

The present disclosure has an object to provide a printer system capable of applying a high-viscosity adhesive onto a print-receiving surface formed by discharging ink.

### SUMMARY OF THE INVENTION

An inkjet direct to film (DTF) printer system for producing a thermal transfer film original by forming an image by discharging ink onto a thermal transfer film and forming an adhesive layer on the image includes a liquid discharger configured to discharge the ink onto the thermal transfer film, a dispenser unit which is a non-inkjet type, including a coating nozzle configured to discharge an adhesive liquid, and configured to apply the adhesive liquid on the image by discharging the adhesive liquid from the coating nozzle, a first carriage on which the liquid discharger is mounted, the first carriage being configured to move the liquid discharger in a main scanning direction, a second carriage on which the dispenser unit is mounted, the second carriage being configured to move the dispenser unit in the main scanning direction, a conveyor configured to convey the thermal transfer film in a sub-scanning direction intersecting the main scanning direction, and a control unit configured to control operations of the liquid discharger, the dispenser unit, the first carriage, the second carriage, and the conveyor, wherein the control unit is configured to form the adhesive layer by controlling the conveyor to perform a line feed after both the first carriage and the second carriage have finished a main scanning operation.

The present invention can provide a printer system capable of applying a high-viscosity adhesive onto a print-receiving surface formed by discharging ink.

### BRIEF DESCRIPTION OF THE DRAWINGS

FIG. 1 is a perspective view illustrating an inkjet DTF printer system according to an embodiment;
FIG. 2 is a block diagram illustrating an example of a hardware configuration of the inkjet DTF printer system according to the embodiment;
FIG. 3 is a plan view illustrating a plurality of liquid discharge heads, a dispenser unit, and a line feed width;
FIG. 4 is a cross-sectional view illustrating an example of a thermal transfer film;
FIG. 5 is a drawing illustrating a dispenser unit according to a first example;
FIG. 6A is a drawing illustrating a dispenser unit according to a second example;
FIG. 6B is a drawing illustrating a rotary pump and a tube of the dispenser unit according to the second example;
FIG. 7 is a drawing illustrating a dispenser unit according to a third example;
FIG. 8 is a drawing illustrating an example of an image printed using a multi-pass recording method with a printer system;
FIG. 9A is a drawing illustrating a shape of a coating nozzle according to a fourth example, and is a drawing illustrating the coating nozzle in a "fast" printing mode;
FIG. 9B is a drawing illustrating a shape of a coating nozzle according to the fourth example, and is a drawing illustrating the coating nozzle in a "high quality" printing mode;
FIG. 10A is a drawing illustrating a shape of a coating nozzle according to a fifth example, and is a drawing illustrating the coating nozzle in a "fast" printing mode;
FIG. 10B is a drawing illustrating a shape of a coating nozzle according to the fifth example, and is a drawing illustrating the coating nozzle in a "high quality" printing mode;
FIG. 10C is a drawing illustrating a shape of a coating nozzle according to the fifth example, and is a drawing illustrating the coating nozzle in a "standard" printing mode;
FIG. 11 is a drawing illustrating shapes of coating nozzles according to a sixth example;
FIG. 12A is a drawing illustrating a spreading state of an adhesive layer in a transfer process;
FIG. 12B is a drawing illustrating a spreading state of an adhesive layer in a transfer process;
FIG. 13 is a drawing illustrating a relationship between a coating nozzle and a coating resolution according to the fifth example;
FIG. 14 is a drawing illustrating a relationship between coating nozzles and coating resolutions according to the sixth example;
FIG. 15 is a flowchart illustrating a procedure for generating printed image data;
FIG. 16 is a flowchart illustrating a procedure for generating coating data for an adhesive liquid; and
FIG. 17 is a flowchart illustrating the procedure for generating the coating data for applying the adhesive liquid using the dispenser unit.

### DESCRIPTION OF THE EMBODIMENTS

In the following, inkjet direct to film (DTF) printer systems and image forming methods according to embodiments of the present invention will be described with reference to the accompanying drawings.

### [OUTLINE OF INKJET DTF PRINTER SYSTEM 100]

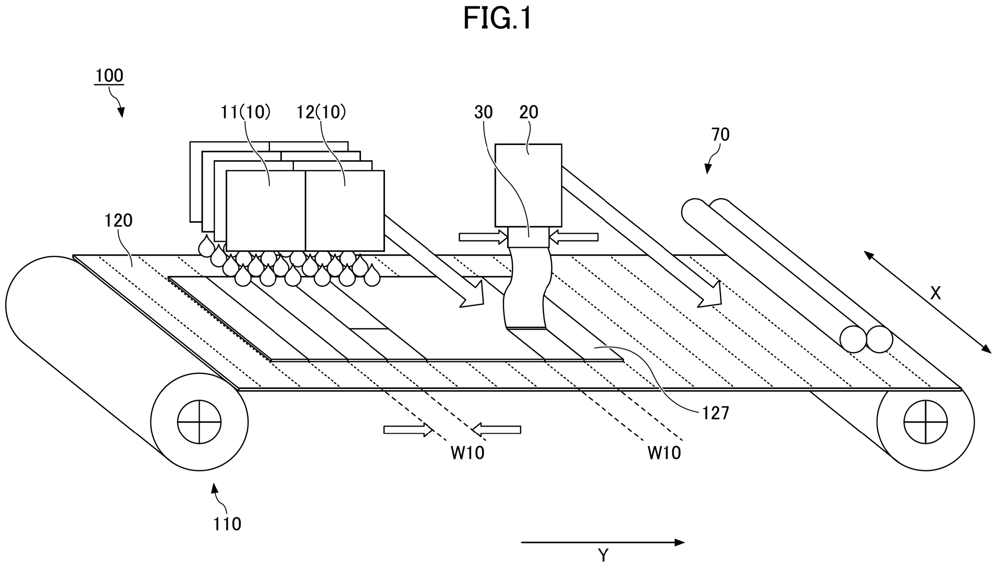

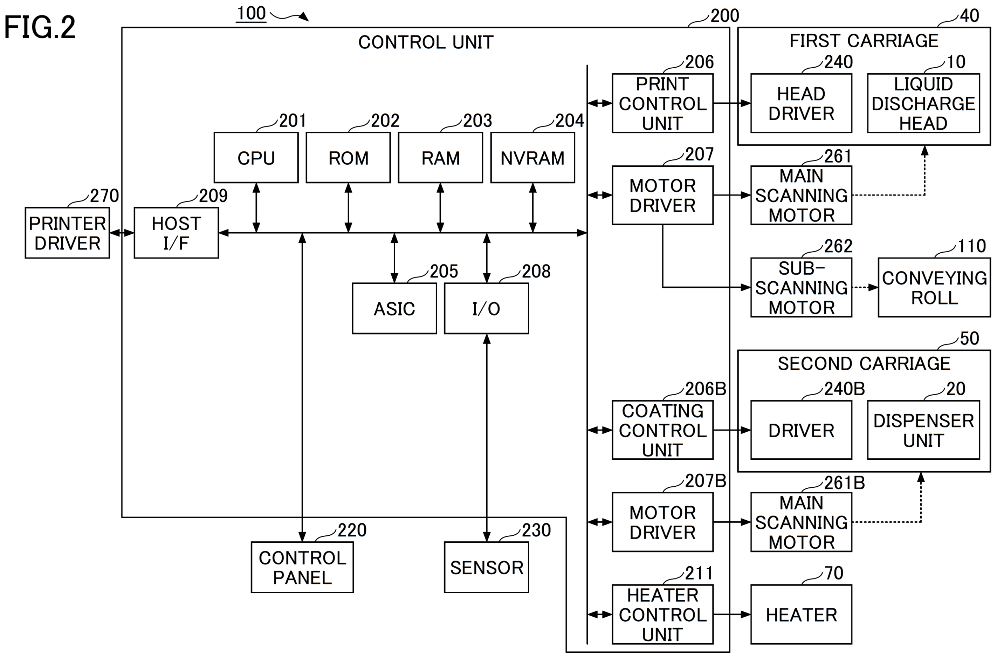

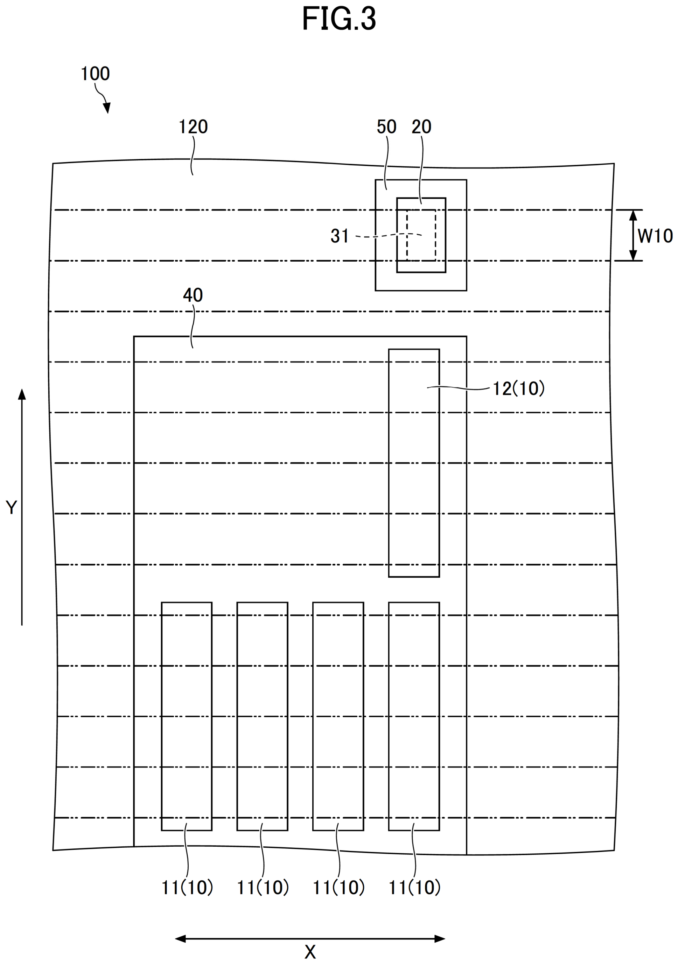

FIG. 1 is a perspective view illustrating an inkjet DTF printer system 100 according to the embodiment. FIG. 2 is a block diagram illustrating an example of a hardware configuration of the inkjet DTF printer system 100 according to the embodiment. FIG. 3 is a plan view illustrating a plurality of liquid discharge heads 10, a dispenser unit 20, and a line feed width W10. Hereinafter, "inkjet DTF printer system" may be abbreviated as "printer system". As described later, the dispenser unit 20 may be a dispenser unit 20A, a dispenser unit 20B, a dispenser unit 20C, or any other structure. When "dispenser unit 20A", "dispenser unit 20B", and "dispenser unit 20C" are not distinguished, they are described as "dispenser unit 20".

In each figure, arrows indicating an X-axis direction, a Y-axis direction, and a Z-axis direction may be illustrated. The X-axis direction is an example of a main scanning direction and is a direction intersecting a conveying direction of a recording medium. The Y-axis direction is an example of a sub-scanning direction and is a direction along the conveying direction of the recording medium. The Z-axis direction is along a vertical direction. The X-axis direction includes a direction indicated by the arrow and the reverse direction. Similarly, the Y-axis direction and the Z-axis direction include directions indicated by the arrow and the reverse directions. The X-axis direction may be referred to as a main scanning direction X. The Y-axis direction may be referred to as a sub-scanning direction Y.

The printer system 100 is based on, for example, a roll-to-roll inkjet recording system. A printer system 100 is provided with a conveying mechanism 110 and conveys a thermal transfer film 120 as a base of a DTF transfer image by a roll-to-roll conveying mechanism. The conveying mechanism 110 includes items such as a motor and a guide roller for conveying the thermal transfer film 120. The thermal transfer film 120 is an example of a resin film. The conveying mechanism 110 conveys the thermal transfer film 120 at a constant conveying speed. The conveying mechanism 110 can convey the thermal transfer film 120 at a constant pitch.

### [LIQUID DISCHARGE HEAD 10]

The printer system 100 includes the plurality of liquid discharge heads 10 as an image printer. The printer system 100 includes a first carriage 40 on which the plurality of liquid discharge heads 10 are mounted. The liquid discharge head 10 discharges ink. The plurality of liquid discharge heads 10 include a liquid discharge head 11 for discharging a color ink and a liquid discharge head 12 for discharging a white ink. The liquid discharge head 12 for discharging the white ink discharges the white ink as a base of an image when white expression of an image or a transfer image for a colored fabric is produced.

The color ink is not limited to CMYK, but may be what is called a light ink (photo ink), a special color ink such as RGB, orange, and violet, or a variety of color inks called metallic inks. The plurality of liquid discharge heads 11 are arranged in a main scanning direction. An arrangement of the color inks is not particularly limited.

The liquid discharge head 12 for discharging the white ink is arranged downstream of the liquid discharge heads 11 in the conveyance direction of the recording medium. The liquid discharge head 12 may be arranged side by side with the liquid discharge heads 11. "Side by side" refers to an arrangement in which components are aligned in the Y-axis direction and arranged next to each other in the X-axis direction. When the liquid discharge heads 11 for the color ink and the liquid discharge heads 12 for the white ink are arranged side by side, the arrangement of the liquid discharge heads 11 and 12 and control of multi-pass recording is preferably configured so that the white ink is printed after the color inks during printing.

The dispenser unit 20 is arranged downstream of the plurality of liquid discharge heads 11 and 12 in the conveying direction.

### [DISPENSER UNIT 20]

The printer system 100 includes a non-inkjet type dispenser unit 20 for applying an adhesive liquid to a print-receiving surface. The printer system 100 includes a second carriage 50 on which the dispenser unit 20 is mounted. The second carriage 50 moves the dispenser unit 20 in the main scanning direction similarly to the first carriage 40.

The dispenser unit 20 applies the adhesive liquid using a non-contact coating method. "Non-contact coating" refers to coating without contacting the recording medium and the print-receiving surface on the recording medium. For example, in a contact coating method in which a coating tool physically contacts an inkjet print-receiving surface, such as a coating roller, problems may arise, including damage to the print-receiving surface and printing ink adhering to the coating tool. In contrast, such problems do not occur with the dispenser unit 20 that performs non-contact coating. "Inkjet print-receiving surface" refers to a print-receiving surface formed by an inkjet. The term "printing ink" refers to ink on the print-receiving surface formed by discharging ink. "Coating" refers to discharging the adhesive liquid from the dispenser unit 20 and adhering the adhesive liquid to the print-receiving surface and the surrounding fabric.

The printer system 100 includes a heater unit 70 for drying the applied adhesive liquid. If a quick-drying adhesive liquid is used, the printer system 100 does not need to include the heater unit 70.

### [GENERAL DTF PRINTING SYSTEM]

Here, general roll-to-roll DTF printing systems will be described. Currently, mainstream DTF printing systems are a combination of large-format inkjet printers developed for signage graphics and powder-application units, commonly referred to as "shakers", manufactured in China or other countries.

Although some general DTF printing systems use a desktop-type inkjet printer, the usable media are cut paper types of about A4 to A3 size, and productivity is low because printing and transfer work is required to be performed for each image. By using a general roll-to-roll large-format inkjet printer, imposing images for a plurality of print jobs on a medium (imposition being a method of efficiently arranging images two-dimensionally), performing continuous printing, and subsequently passing the printed medium through a shaker, a plurality of thermal transfer images can be produced at one time.

### [THERMAL TRANSFER FILM 120]

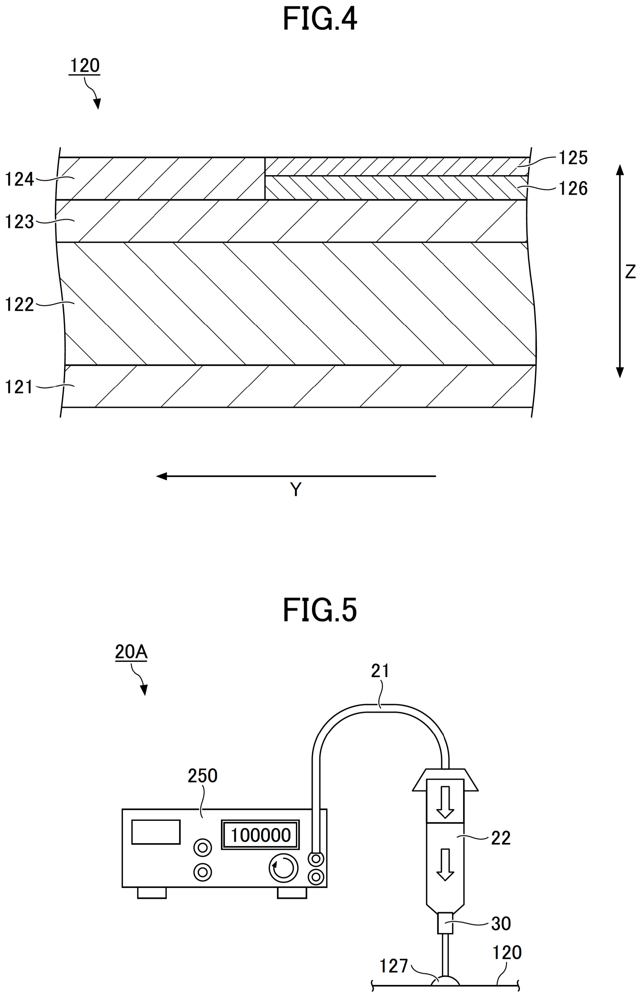

FIG. 4 is a cross-sectional view illustrating an example of the thermal transfer film 120. As illustrated in FIG. 4, the thermal transfer film 120 has an anti-charging layer 121, a base material film 122, a release layer 123, and an ink-receiving layer 124. The base material film 122 is laminated on the anti-charging layer 121, the release layer 123 is laminated on the base material film 122, and the ink-receiving layer 124 is laminated on the release layer 123.

The base material film 122 is, for example, a polyester resin film or the like.

The color inks are discharged to the ink-receiving layer 124, and after the color inks are discharged, the white ink is discharged.

The ink-receiving layer 124 is provided because the base material film 122 does not absorb water-color ink used for printing, and an absorbing layer for holding the ink on the surface is provided. The absorbing layer is mainly composed of silica or the like. The ink-receiving layer 124 is an absorbing layer for holding the ink.

DTF printing is applied to garments, such as "T-shirts", that come into direct contact with the skin. Accordingly, skin safety is emphasized, and water-based inks are used. The solvents contained in the water-based inks are also harmless to the human body.

The release layer 123 is provided so that an image layer (inkjet ink permeating the ink-receiving layer 124) can be readily released from the base material film 122 when thermal transfer is performed. Some products (resin films) have functions of both the ink-receiving layer and the release layer.

The anti-charging layer 121 is provided in order to prevent the thermal transfer films 120 from sticking to each other (blocking) due to static electricity when the thermal transfer film 120 is rolled into a roll shape.

### [PRINTING WITH WHITE INK]

In the thermal transfer film 120, the surface on which the ink-receiving layer 124 is formed is pressed against, for example, a T-shirt fabric. Therefore, in the printer system 100, after printing with color ink, printing is performed with white ink.

When the T-shirt fabric is a colored fabric other than white, the white ink functions as an underlayer for rendering white areas and for preventing the fabric color from showing through the printed image. The white ink may also be formed as an underlayer on a white T-shirt fabric in order to facilitate adhesion of hot-melt powder in a subsequent process.

### [HOT-MELT POWDER APPLICATION PROCESS]

In a printer system according to the related art, a hot-melt powder application process is performed. In the printer system 100 according to the embodiment, the hot-melt powder application process is not performed.

In the hot-melt powder application process, hot-melt powder is applied to a print-receiving surface and its surrounding area. Since accurately applying dry powder to the fine details of an image requires a great deal of time and effort, in the hot-melt powder application process, the powder is sprayed regardless of whether an image portion or a non-image portion is used. The "image portion" may be a printed portion formed by discharging ink. The "non-image portion" may be a surface on which no ink is attached. Since moisture in the ink that has permeated the ink-receiving layer 124 remains in the image portion, powder adhering to the image portion absorbs the moisture contained in the ink-receiving layer 124 and agglomerates.

### [HOT-MELT POWDER REMOVAL PROCESS]

In the printer system according to the related art, after the hot-melt powder application process is performed, a hot-melt powder removal process is performed. In the printer system 100 according to the embodiment, the hot-melt powder removal process is not performed.

In the hot-melt powder removal process, the powder of the "non-image portion", which has not agglomerated is removed. In the hot-melt powder removal process, for example, excess powder is removed by tapping the film from the back side with a rotating rod. At this time, the hot-melt powder on the image portion adheres to the image portion.

### [HOT-MELT POWDER THERMALLY MELTING PROCESS]

In the printer system according to the related art, a hot-melt powder thermally melting process is performed. In the printer system 100 according to the embodiment, the hot-melt powder thermally melting process is not performed.

In the hot-melt powder thermally melting process, the hot-melt powder remaining on the image portion is melted after the hot-melt powder removal process is performed to form an adhesive layer. When the powder is merely agglomerated by moisture, evaporation of the moisture causes the powder to revert to a readily dispersible state. Therefore, in the hot-melt powder thermally melting process, the hot-melt powder is thermally melted and reformed as an adhesive layer.

### [THERMAL TRANSFER PROCESS]

In a thermal transfer process, the thermal transfer film 120 is subjected to a heat pressurization treatment by determining the front side and the back side so that the inkjet printed side (the ink-receiving layer 124 side) is in contact with the fabric surface of the transfer target. Thus, the white ink and the color inks contained in the ink-receiving layer 124 are transferred to the fabric.

### [BASE MATERIAL FILM REMOVAL PROCESS]

After the thermal transfer process is performed, a removal process of the base material film 122 is performed. The base material film 122 is also referred to as a base film. The adhesive layer is formed only on areas where color ink or white ink is printed. The area where the adhesive layer is formed is transferred to the fabric. The area where the adhesive layer is not formed is removed from the fabric together with the base material film 122. The image remains on the T-shirt fabric and the transfer is completed.

### [THICKNESS OF ADHESIVE LAYER 127]

Next, the thickness of the adhesive layer 127 will be described. Specifically, the mechanism by which the thickness of the adhesive layer 127 affects friction resistance and washing fastness will be described.

The adhesive layer 127 returns to a liquid state by heating during heat pressing. When the adhesive layer 127 is thick, the liquefied adhesive permeates the fibers of the fabric during pressing, and solidifies again by cooling after heat pressing, forming roots between the fibers as anchors.

By an anchor effect of the anchors entangled with the fibers, the printed image (ink-permeated ink-receiving layer 124) can be firmly held on the surface of the fabric even if the fabric is subjected to physical stress such as physical rubbing when worn, stretching, bending, washing, and drying.

Conversely, when the amount of the adhesive is small and the adhesive layer 127 is thin, the range in which the adhesive permeates is limited to a part of the fibers on the surface of the fabric during heat pressing, and the printed image is only placed on the surface of the fabric. The adhesion of the ink-receiving layer 124 is insufficient. In this case, when the T-shirt fabric is subjected to physical stress such as washing, the adhesive may be readily removed from the fabric together with the printed surface.

### [DISCHARGE CHARACTERISTICS DEPENDING ON RESIN CONTENT IN INK]

Next, discharge characteristics depending on the resin content in the ink will be described. Normal ink for inkjet includes pigment and other components and resin components. When the resin content in the ink is excessive, a nozzle becomes clogged with resin, and liquid cannot be discharged from the liquid discharge head. An excessive resin content in the ink also adversely affects discharge characteristics.

### [DISPENSER UNIT 20A]

FIG. 5 is a drawing illustrating the dispenser unit 20A according to a first example. The printer system 100 includes the dispenser unit 20A illustrated in FIG. 5. As the resin content in the adhesive liquid increases, the adhesive liquid becomes highly viscous and has characteristics such as of non-Newtonian fluids. The dispenser unit 20A can apply such an adhesive liquid on a print-receiving surface. The dispenser unit 20A is an example of a non-inkjet type dispenser unit. The non-inkjet type does not include a type using a liquid discharge head.

The dispenser unit 20A uses a syringe to apply the adhesive liquid to the print-receiving surface by controlling supply of air from a controller 250. The dispenser unit 20A includes a syringe 22 for storing the adhesive liquid. A tube 21 for supplying air is connected to the syringe 22. The controller 250 can supply air into the syringe 22 via the tube 21. The printer system 100 may include a pressurizing mechanism for supplying air.

### [DISPENSER UNIT 20B]

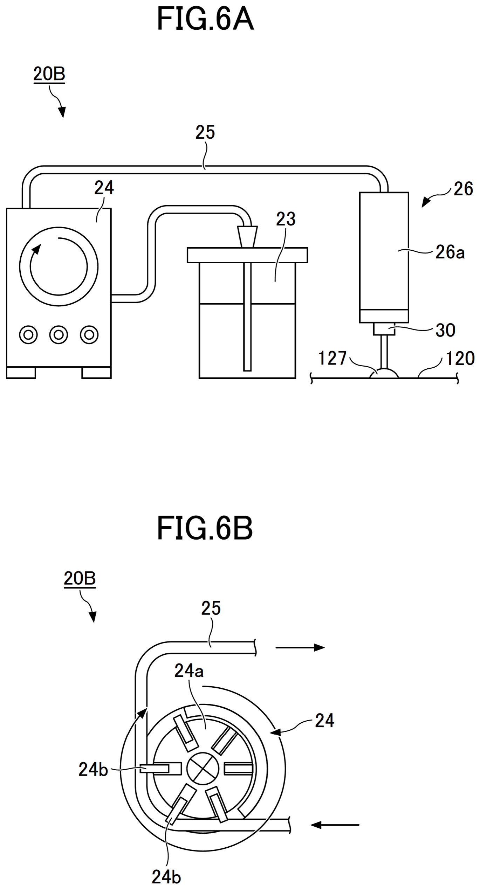

FIG. 6A is a drawing illustrating the dispenser unit 20B according to a second example. FIG. 6B is a drawing illustrating a rotary pump 24 and a tube 25 of the dispenser unit 20B according to the second example. The printer system 100 may include the dispenser unit 20B illustrated in FIG. 6A instead of the dispenser unit 20A illustrated in FIG. 5. The dispenser unit 20B is an example of a non-inkjet dispenser unit.

The dispenser unit 20B applies adhesive liquid to a print-receiving surface by applying sliding pressure to the tube 25 by the rotary pump 24. The dispenser unit 20B is provided with a tank 23 for storing adhesive liquid, the tube 25 for transferring adhesive liquid, the rotary pump 24 for transferring adhesive liquid in the tube 25, and a coating unit 26.

The rotary pump 24 has a rotary body 24a which rotates around an axis. A plurality of protrusions 24b protruding in the radial direction are provided on the outer peripheral surface of the rotary body 24a. The protrusions 24b contact the tube 25 while rotating, and transfer the adhesive liquid into the tube 25. The tube 25 has flexibility and is deformed by being pressed by the protrusions 24b. The adhesive liquid in the tube 25 is extruded as the protrusions 24b move. The adhesive liquid in the tank 23 flows through the tube 25 and is supplied to the coating unit 26. The adhesive liquid in the coating unit 26 is applied onto the print-receiving surface. Since the dispenser unit 20B does not require an air supply for generating liquid feeding pressure, a compact unit structure can be formed.

### [DISPENSER UNIT 20C]

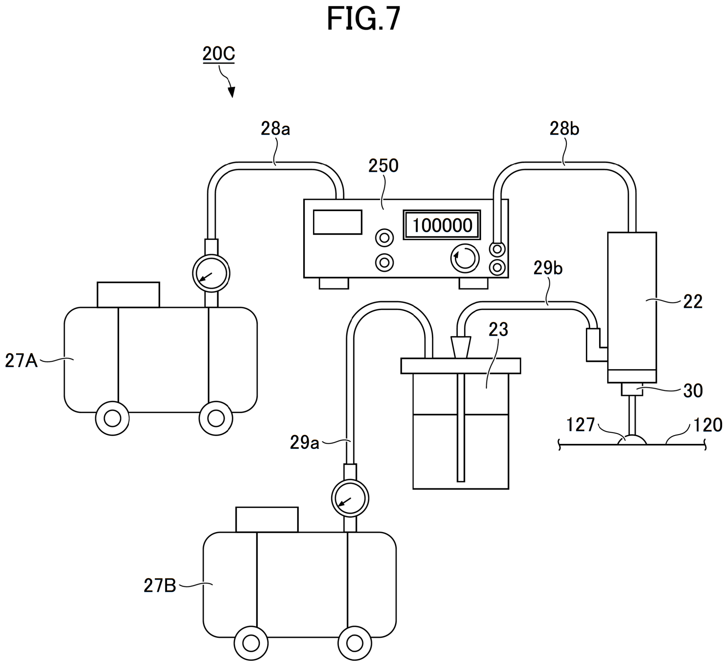

FIG. 7 is a drawing illustrating the dispenser unit 20C according to a third example. The printer system 100 may include the dispenser unit 20C illustrated in FIG. 7 instead of the dispenser unit 20A illustrated in FIG. 5. The dispenser unit 20C is an example of a non-inkjet dispenser unit.

In the dispenser unit 20C, compressors 27A and 27B can be used to individually supply and apply the adhesive liquid using pressurized air.

The dispenser unit 20C includes the compressors 27A and 27B, the controller 250, the tank 23, the coating unit 26, and tubes 28a, 28b, 29a, and 29b. The tube 28a connects the compressor 27A and the controller 250. The tube 28b connects the controller 250 and the coating unit 26. The tube 29a connects the compressor 27B and the tank 23. The tube 29b connects the tank 23 and the coating unit 26.

The compressor 27B pressurizes air and supplies air to the liquid discharge head 10. The adhesive liquid in the tank 23 is pressurized by air, passes through the tube 29b, and is supplied to the coating unit 26.

The compressor 27A pressurizes air and supplies air to the controller 250. The controller 250 supplies the pressurized air to the coating unit 26. The air supplied to the coating unit 26 pressurizes the adhesive liquid in the coating unit 26, and the adhesive liquid is applied onto the print-receiving surface.

In the dispenser unit 20C, air of high pressure can be utilized, and the adhesive liquid of high viscosity can be applied onto the print-receiving surface.

The dispenser units 20A, 20B, and 20C can generate a high application pressure compared with a liquid discharge head having a piezoelectric element or a thermal ink jet. The dispenser units 20A, 20B, and 20C can apply the adhesive liquid of high viscosity, in which a resin ratio is increased to 50% or more by weight, onto the print-receiving surface. The resin ratio is a value indicating the ratio of resin contained in the adhesive liquid.

### [IMAGE PRINTING USING MULTI-PASS RECORDING METHOD]

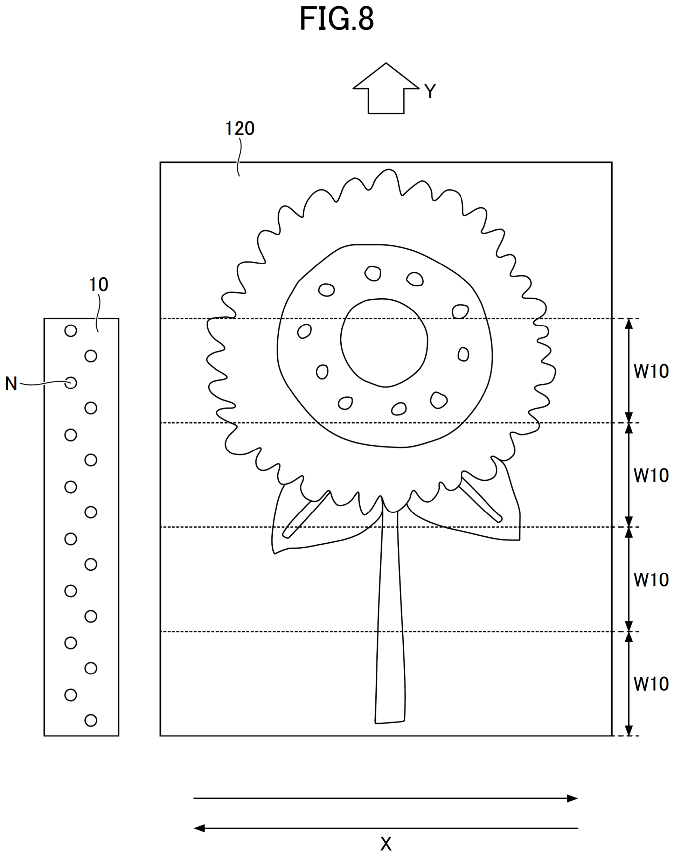

FIG. 8 is a drawing illustrating an example of an image printed using a multi-pass recording method with the printer system 100. The conveying mechanism 110 conveys the thermal transfer film 120 at a constant speed.

The liquid discharge head 10 has a nozzle array having a medium width. The liquid discharge head 10 is moved in the main scanning direction X by the first carriage 40. The liquid discharge head 10 forms an image by discharging ink while moving in the main scanning direction X. The liquid discharge head 10 may perform unidirectional printing or bidirectional printing.

When printing is performed using the liquid discharge head 10, landing positions of ink droplets (i.e., dot forming positions) may deviate from ideal positions due to various error factors, including deflection of discharged droplets caused by rolling, yawing, and pitching motions of the liquid discharge head 10 during a main scanning operation, superimposed inherent vibrations resulting from machining tolerances of a guide rod and a rail used to move the first carriage 40 in the main scanning direction X, and feed variations in the sub-scanning direction Y associated with conveyance of a recording medium. When the landing position of an ink droplet deviates from an ideal position, a band-like image fluctuation (banding) may occur on a printed image.

In a general inkjet serial head machine, banding can be reduced by adopting a distributed printing method referred to as multi-pass printing.

In "multi-pass printing", image formation is not completed by moving the liquid discharge head 10 in the main scanning direction X for one time, but printing is performed by dividing an image recording portion into a plurality of passes (the number of divisions in the main scanning direction X) and interlace (the number of divisions in the sub-scanning direction Y), and intermittently feeding the recording medium with a fixed line feed width (line feed amount) W10.

"Intermittent feeding" means that once the recording medium is moved by the line feed width W10, the conveyance of the recording medium is stopped, the liquid discharge head 10 is moved in the main scanning direction X to perform printing, and then the operation of moving the recording medium by the line feed width W10 is repeated.

In the example illustrated in FIG. 8, an image is completed by one main scan (pass) and four sub-scans (interlaced conveyance). This is referred to as a multi-recording example of four scans. The term "one main scan (pass)" refers to a single movement of the liquid discharge head 10 in the main scanning direction X. The term "four sub-scans (interlaced conveyance)" refers to conveying the recording medium by the line feed width W10 four times. The term "scan" refers to a number of "passes × interlaces", and FIG. 8 illustrates an example of multi-pass recording in which image formation is completed by four scans. For example, "four main scans (passes) and one sub-scan (interlaced conveyance)" may be described as "four scans". Further, "four scans" may be defined as "two passes × two interlaces", "four passes × one interlace", or "one pass × four interlaces" depending on whether the image is divided in the main scanning direction X or the sub-scanning direction Y. Here, "one interlace" means that the image is not divided in the sub-scanning direction Y.

In roll-to-roll printing, intermittent conveyance of a recording medium in multi-pass printing is continuously performed in order to continuously draw a plurality of imposed images. The conveyance of the recording medium in roll-to-roll printing is different from that in cut sheet printing in which the recording medium is completed for each image.

In an adhesive liquid coating process performed after an image forming process in which an image is formed by the liquid discharge head 10, a coating operation is also performed in accordance with the intermittent conveyance.

### [SHAPE OF COATING NOZZLE]

In the printer system 100, the adhesive liquid can be applied in accordance with the line feed width W10 of the multi-pass recording. The inner diameter of the coating nozzle in the dispenser unit 20A is the same as the line feed width W10. The term "same" includes approximately the same. For example, the inner diameter of the coating nozzle 31 may be equal to or more than 95% and equal to or less than 105% of the line feed width W10.

In the printer system 100, a plurality of multi-pass recording modes can be performed in accordance with image quality and productivity. In the printer system 100, for example, a plurality of inner diameters of the coating nozzles are assumed. In the printer system 100, the inner diameters of the coating nozzles may be changed in accordance with the multi-pass recording mode.

For example, since the spread of dots in the ink-receiving layer 124 varies depending on the combination of the ink and the ink-receiving layer 124, the spread of ink may be insufficient depending on the selection of the user when the thermal transfer film 120 other than the recording medium recommended by the manufacturer is used.

For example, when the spread of dots is insufficient, since streaks and banding are likely to be conspicuous, selecting a "high quality" mode, in which the resolution and the number of scans are larger than a "standard" mode, is required.

For example, the following Table 1 is an example of inkjet printing modes. If a multi-pass overlap recording mode in which the line feed ends are overlapped to improve the banding resistance is included, further classified printing modes may be set.

**[Table 1]**

| Printing Mode | Resolution | Number of Passes | Number of Interlaces | Line Feed Amount | Purpose of the Mode |
|---|---|---|---|---|---|
| Fast | 600 × 600 dpi | 1 | 2 | 16 mm | Precedence of Productivity |
| Standard | 600 × 600 dpi | 2 | 2 | 8 mm | Default |
| High Quality | 1200 × 1200 dpi | 2 | 4 | 4 mm | Precedence of Image Quality |

The printer system 100 is provided with a device for switching the inner diameter of the coating nozzle of the dispenser unit 20A in order to correspond to these printing modes. The device for switching the inner diameter may change an opening width in the sub-scanning direction or may change the number of coating nozzles 31 from which the adhesive liquid can be discharged.

### [SHAPE OF COATING NOZZLE ACCORDING TO FOURTH EXAMPLE]

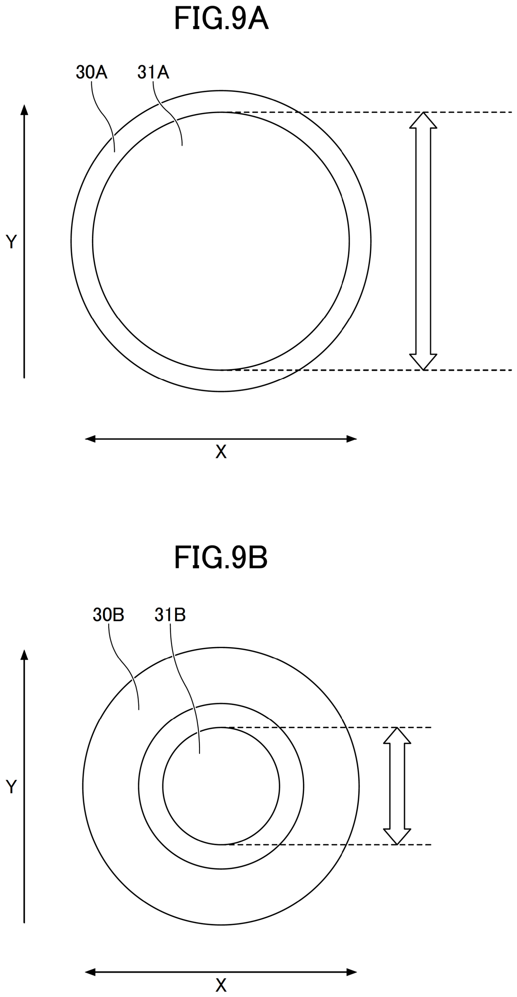

FIG. 9A is a drawing illustrating a shape of a coating nozzle 31A according to a fourth example, and is a drawing illustrating the coating nozzle 31A in the "fast" printing mode. FIG. 9B is a drawing illustrating a shape of a coating nozzle 31B according to the fourth example, and is a drawing illustrating the coating nozzle 31B in the "high quality" printing mode. The coating nozzle 31A illustrated in FIG. 9A is set to the line feed width W10 of 16 mm. The coating nozzle 31B illustrated in FIG. 9B is set to the line feed width W of 4 mm. The coating nozzles 31A and 31B are, for example, circular.

The dispenser unit 20A may have the coating nozzles 31A and 31B according to the fourth example, for example. In this case, the dispenser unit 20A may include a coating nozzle module 30A having the coating nozzle 31A and a coating nozzle module 30B having the coating nozzle 31B. For example, the user can change between the coating nozzle module 30A and the coating nozzle module 30B. The coating nozzle module 30A and the coating nozzle module 30B can be attached to and removed from the syringe 22. When the "coating nozzle 31A" and the "coating nozzle 31B" are not distinguished, the term "coating nozzle 31" is used. Similarly, when the "coating nozzle module 30A" and the "coating nozzle module 30B" are not distinguished, the term "coating nozzle module 30" is used.

### [SHAPE OF COATING NOZZLE ACCORDING TO FIFTH EXAMPLE]

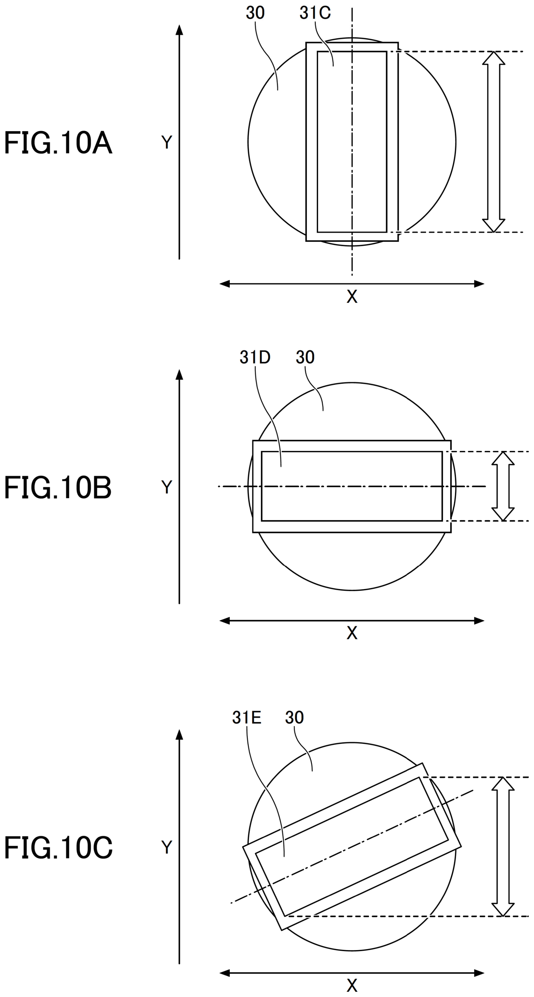

FIG. 10A is a drawing illustrating a shape of a coating nozzle 31C according to a fifth example, and is a drawing illustrating the coating nozzle 31C in a "fast" printing mode. FIG. 10B is a drawing illustrating a shape of a coating nozzle 31D according to the fifth example, and is a drawing illustrating the coating nozzle 31D in a "high quality" printing mode. FIG. 10C is a drawing illustrating a shape of a coating nozzle 31E according to the fifth example, and is a drawing illustrating the coating nozzle 31E in a "standard" printing mode.

The opening width of the coating nozzle 31C illustrated in FIG. 10A is set to the line feed width W10 of 16 mm. The opening width of the coating nozzle 31D illustrated in FIG. 10B is set to the line feed width W of 4 mm. The opening width of the coating nozzle 31E illustrated in FIG. 10C is set to the line feed width W of 8 mm. The coating nozzles 31C, 31D, and 31E are, for example, rectangular. The coating nozzles 31C, 31D, and 31E are assigned different reference numerals; however, the coating nozzles 31C, 31D, and 31E represent the same component and differ only in angular orientation about a predetermined axis (Z-axis). The longitudinal direction of the coating nozzle 31C is arranged along the sub-scanning direction Y. The longitudinal direction of the coating nozzle 31D is arranged along the main scanning direction X. The longitudinal direction of the coating nozzle 31E is arranged so as to be inclined at a predetermined angle with respect to the main scanning direction X. When the "coating nozzle 31C", the "coating nozzle 31D" and the "coating nozzle 31E" are not distinguished, the term "coating nozzle 31" is used.

The dispenser unit 20A may have the coating nozzles 31C, 31D, and 31E according to the fifth example, for example. In this case, the dispenser unit 20A can rotate the coating nozzle module 30 in which the coating nozzles 31C, 31D, and 31E are formed around the axis. Thus, the longitudinal positions of the coating nozzles 31C, 31D, and 31E can be changed. The dispenser unit 20A has a motor or a guide mechanism for rotating the coating nozzle module 30. The guide mechanism may have, for example, an uneven shape formed in a spiral shape. The dispenser unit 20A having the motor mechanism for rotating may automatically rotate the coating nozzle module 30 in accordance with the printing mode.

### [SHAPE OF COATING NOZZLE ACCORDING TO SIXTH EXAMPLE]

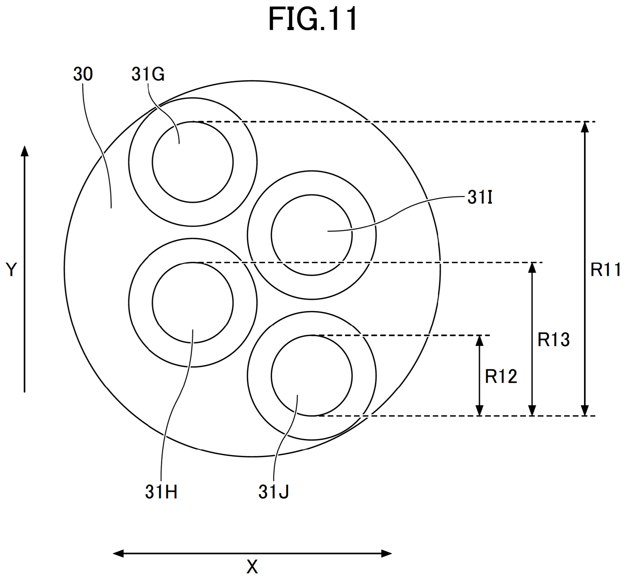

FIG. 11 is a drawing illustrating shapes of coating nozzles 31G to 31J according to a sixth example. The dispenser unit 20A may include a coating nozzle module 30 having the coating nozzles 31G to 31J. The coating nozzles 31G and 31H are arranged at the same position in the main scanning direction X and are arranged side by side along the sub-scanning direction Y. The coating nozzles 31I and 31J are arranged at the same position in the main scanning direction X and are arranged side by side along the sub-scanning direction Y. The coating nozzles 31I and 31J are arranged offset from the coating nozzles 31G and 31H in the main scanning direction X and the sub-scanning direction Y. The coating nozzles 31I and 31J may be arranged in a single column along the sub-scanning direction Y. When the "coating nozzle 31G", the "coating nozzle 31H", the "coating nozzle 31I", and the "coating nozzle 31J" are not distinguished, the term "coating nozzle 31" is used.

The dispenser unit 20A may have a shutter for selectively opening and closing the coating nozzles 31G to 31J. Thus, the dispenser unit 20A can discharge the adhesive liquid by selecting the coating nozzles 31G to 31J from which the adhesive is discharged.

The coating nozzles 31G to 31J have a circular shape. The dispenser unit 20A may have a rectangular shape as illustrated in FIG. 10. The opening width is 1 mm or more so as to discharge the high viscosity liquid. The coating nozzle module 30A discharges the adhesive liquid from the coating nozzles 31G to 31J in the "fast" printing mode. The coating nozzle module 30A discharges the adhesive liquid from the coating nozzle 31J in the "high quality" printing mode. The coating nozzle module 30A discharges the adhesive liquid from the coating nozzles 31H and 31J in the "standard" printing mode.

For example, in the case of the conditions based on Table 1, an opening width R11 of the coating nozzle 31 in the "fast" printing mode may be, for example, 16 mm. An opening width R12 in the "high quality" printing mode may be, for example, 4 mm. An opening width R13 in the "standard" printing mode may be, for example, 8 mm.

The dispenser units 20B and 20C are provided with the coating nozzle modules 30, 30A, and 30B as the dispenser unit 20A, and the inner diameters can be changed in accordance with the printing mode.

### [SPREADING OF ADHESIVE LIQUID IN TRANSFER PROCESS]

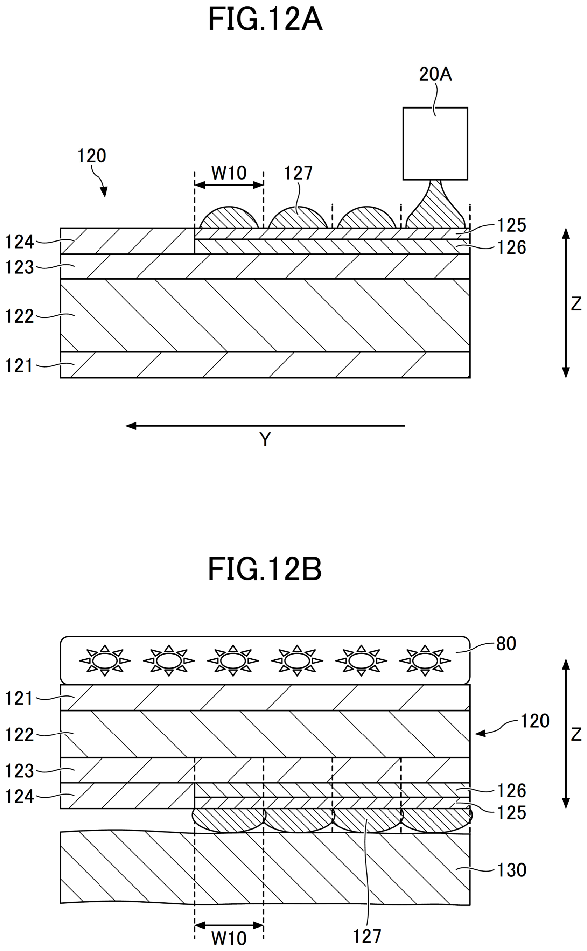

FIG. 12A and FIG. 12B are drawings illustrating a spreading state of an adhesive layer in the transfer process. In the liquid discharge head 10 for discharging ink, when the accuracy of the landing position is low, streaks and banding are likely to occur in a printed image. Therefore, high accuracy of the landing position is required in order to prevent streaks and banding. The accuracy of the landing position in the liquid discharge head 10 is, for example, several tens of micrometers. Conversely, the dispenser unit 20A for discharging the adhesive liquid may have a certain tolerance in the coating width because the dispenser unit 20A is used to form an adhesive layer that is not directly visible. Since the dispenser unit 20A is not required to have the accuracy of the landing position as high as that of the liquid discharge head 10, the dispenser unit 20A discharges the liquid with lower positional accuracy than that of the landing position in the liquid discharge head 10.

In the heat pressing process, when the heat-melted adhesive layer is pressed against the T-shirt fabric, the surface close to the heat pressing machine is blocked by the smooth base material film 122 which is not thermally deformed. Therefore, if the coating width of the adhesive liquid is excessive, the adhesive liquid only permeates into the fabric. Conversely, even if the adhesive layer is slightly insufficient, the softened adhesive is pressed and spread so as to fill the gap by the press. Therefore, even if the line feed width does not exactly match the application width W10 of the actually applied adhesive liquid, it is sufficient that the two widths substantially match within an acceptable level of accuracy (approximately 15%). The "application width" may be the opening width of the coating nozzle. Alternatively, when there are a plurality of openings as illustrated in FIG. 11, the "application width" may be the total width of the openings to be used.

### [RESOLUTION OF PRINTED IMAGE AND RESOLUTION OF ADHESIVE COATING DATA]

Next, the difference between the resolution of the printed image and the adhesive coating data will be described. The resolution of image printing in the printer system 100 is, for example, 600 × 600 dpi or higher. This is because the image printer is based on a large-format inkjet printer originally developed as a high-quality product for signage graphics, and because printing is performed on a film. When the recording medium is a film, deviations in dot landing positions tend to be more noticeable; therefore, the resolution is set at a relatively high level to compensate for such deviations.

For example, in a DTG (Direct to Garment) printer in which ink droplets are directly discharged onto the fabric, the ink bleeds along the fabric fibers, causing the image to become somewhat blurred and thus slight dot placement inaccuracies are not noticeable. The resolution of image printing in the DTG printer may be, for example, approximately 300 × 300 dpi.

Conversely, in a DTF printer, the ink droplets are discharged into the ink-receiving layer 124 formed on the smooth base material film 122, so that a well-defined circular dot is formed on the ink-receiving layer 124, and the contrast between the droplet deposition area and the droplet non-deposition area is clearly raised. This is no different from printing on a signage graphics medium, and since the image quality is directly transferred to the fabric through the adhesive layer, the dot shape, streaks, unevenness, banding, and the like are directly reflected on the DTF image. Therefore, a printed image portion of the DTF requires high image quality. The term "printed image portion" may be a portion where an image is formed. The term "droplet deposition area" refers to an area where ink droplets have landed. The "droplet deposition portion" refers to a portion where ink droplets have landed. The term "droplet non-deposition portion" refers to a portion where ink droplets have not landed.

Conversely, the coating resolution of the dispenser unit 20 may be set to a relatively low level based on the line feed width W10. Since the adhesive layer is transparent or lightly milky white unless intentionally colored, slight overflow of the adhesive layer 127 beyond the printed image portion scarcely affects the finished quality of the printed product. Accordingly, a relatively coarse coating resolution is sufficient for the dispenser unit 127.

### [RELATIONSHIP BETWEEN COATING NOZZLE AND COATING RESOLUTION ACCORDING TO FIFTH EXAMPLE]

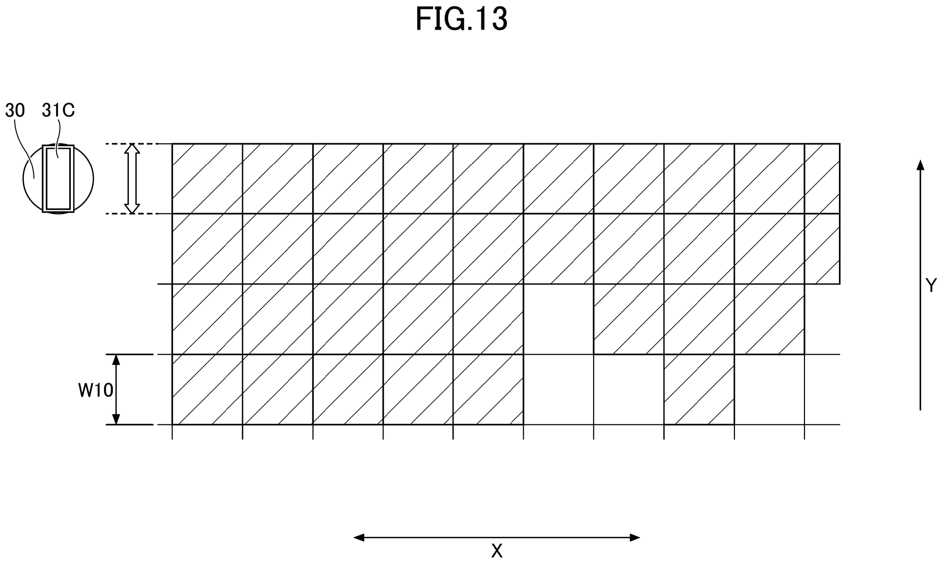

FIG. 13 is a drawing illustrating a relationship between the coating nozzle 31C and a coating resolution according to the fifth example. As illustrated in FIG. 13, since the coating data for the coating nozzle 31C corresponds one to one, the coating data has a small number of divisions. The opening width of the coating nozzle 31C corresponds to the length of the coating data in the sub-scanning direction Y. The term "coating data" may refer to data concerning whether or not the adhesive liquid is applied. The term "coating resolution" may refer to a resolution of coating data.

### [RELATIONSHIP BETWEEN COATING NOZZLES AND COATING RESOLUTIONS ACCORDING TO SIXTH EXAMPLE]

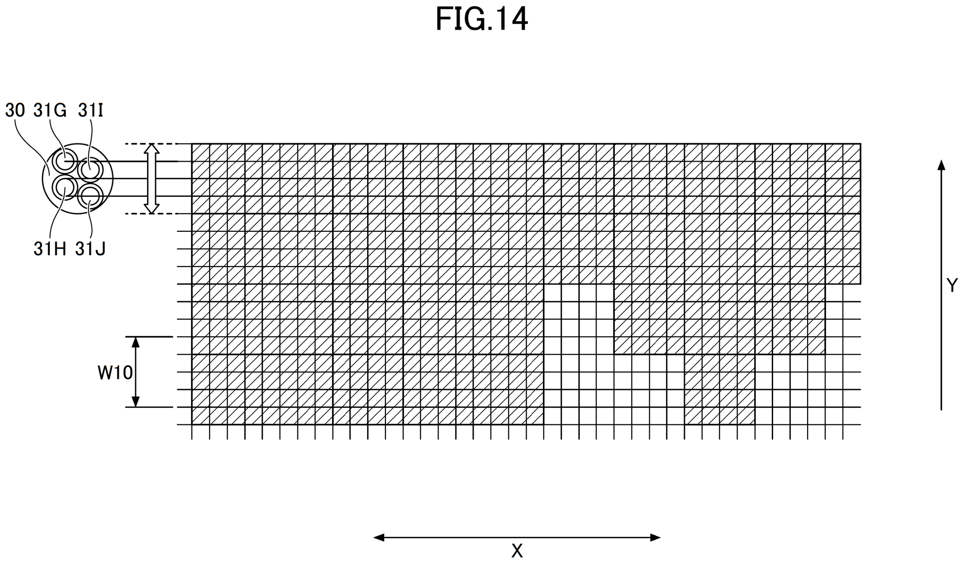

FIG. 14 is a drawing illustrating a relationship between coating nozzles 31G to 31J and a coating resolution according to the sixth example. The coating nozzle module 30 according to the sixth example includes, as described above, a plurality of coating nozzles 31G to 31J. The dispenser unit 20 can selectively open or close the coating nozzles 31G to 31J in accordance with the line feed width W10 of the multi-pass recording. The smallest unit of coating data may be the opening width of the coating nozzles 31G to 31J. The opening width of the coating nozzles 31G to 31J is smaller than the opening width of the coating nozzle 31C in the sub-scanning direction Y. The opening width in the sub-scanning direction Y is an example of the inner diameter of the coating nozzle.

The coating resolution in the main scanning direction X of the dispenser unit 20 does not necessarily need to match the inner diameter of the coating nozzle.

In FIGS. 13 and 14, the "coating resolution in the main scanning direction X" and the "coating resolution in the sub-scanning direction Y" are illustrated with the same width. The "coating resolution in the main scanning direction X" may be finely divided than the "coating resolution in the sub-scanning direction Y". However, in view of an increase in data size and computational load caused by resolution scaling, as well as the ability of the dispenser unit 20 to keep up with the required coating performance, it is preferable that the resolutions be set at the same scale.

### [HARDWARE CONFIGURATION OF PRINTER SYSTEM 100 ACCORDING TO EMBODIMENT]

FIG. 2 is a block diagram illustrating an example of a hardware configuration of the printer system 100 according to the present embodiment. As illustrated in FIG. 2, the printer system 100 includes a control unit 200, a control panel 220, a sensor 230, a head driver 240, a main scanning motor 261, a sub-scanning motor 262, the first carriage 40, the second carriage 50, a conveying mechanism 110, a printer driver 270, and the heater unit 70.

The control unit 200 includes a CPU (Central Processing Unit) 201, a ROM (Read Only Memory) 202, and a RAM (Random Access Memory) 203.

The CPU 201 controls the entirety of the printer system 100. The ROM 202 stores fixed data such as a program executed by the CPU 201. The RAM 203 temporarily stores image data and the like.

The control unit 200 includes an NVRAM (Non-Volatile RAM) 204 and an ASIC (Application Specific Integrated Circuit) 205.

The NVRAM 204 is a nonvolatile memory that holds data even when the power of the printer system 100 is shut off. The ASIC 205 performs various signal processing for image data, image processing for rearrangement, and other input and output signals for controlling the entirety of the printer system 100. The ASIC 205 is an image processing module.

The control unit 200 has a print control unit 206. The print control unit 206 transfers data for driving the liquid discharge head 10 to the head driver 240. The head driver 240 drives the liquid discharge head 10 provided in the first carriage 40 to discharge ink from the liquid discharge head 10.

The control unit 200 has a motor driver 207. The motor driver 207 drives the main scanning motor 261 and the sub-scanning motor 262. The main scanning motor 261 is driven to move and scan the first carriage 40. The sub-scanning motor 262 drives a conveying mechanism 110 to convey the thermal transfer film 120 in the sub-scanning direction Y.

The control unit 200 has a coating control unit 206B. The coating control unit 206B transfers data for driving the dispenser unit 20 to a driver 240B. The driver 240B drives the dispenser unit 20 provided in the second carriage 50 to discharge the adhesive liquid from the dispenser unit 20.

The control unit 200 has a motor driver 207B. The motor driver 207B drives a main scanning motor 261B. The main scanning motor 261B is driven to move and scan the second carriage 50.

The control unit 200 has an I/O 208. The I/O 208 acquires information from the sensor 230 and extracts information used for controlling each part of the main body of the printer system 100. For example, the sensor 230 may be a sensor group including a plurality of types of sensors, including, for example, a photo sensor, a temperature sensor, an encoder sensor, and the like. The control panel 220 inputs and outputs various types of information.

The control unit 200 has a host I/F 209. The host I/F 209 transmits and receives data and signals to and from the host side. Concretely, data and signals are transmitted and received from the printer driver 270 side of a host such as an information processing apparatus such as a client PC, an image scanner, and an imaging apparatus via a cable or a network. The CPU 201 reads and analyzes print data in a reception buffer included in the host I/F 209. Then, image processing and data rearrangement processing are performed in the ASIC 205, and the image data is transferred from the print control unit 206 to the head driver 240.

The print control unit 206 transfers the image data as serial data and outputs a transfer clock, a latch signal, a control signal, and the like required for transferring the image data to the head driver 240. The head driver 240 selectively applies drive pulses included in a drive waveform supplied from the print control unit 206 to a pressure generator of the liquid discharge head 10 based on image data corresponding to one line of the liquid discharge head 10 input serially. Thus, the liquid discharge head 10 is driven to discharge liquid.

By selecting part or all of the pulses included in the drive waveform and part or all of waveform elements forming the pulses, dots of different sizes, such as large, medium, and small droplets, can be selectively formed.

The control unit 200 has a heater control unit 211. The heater control unit 211 controls the heater unit 70 to achieve a set temperature.

The control unit 200 can control the operations of the liquid discharge head 10, the dispenser unit 20, the first carriage 40, the second carriage 50, and the conveying mechanism 110. The control unit 200 can cause the dispenser unit 20 to perform the coating operation by controlling the movement of the second carriage 50 so as to synchronize with the liquid discharge operation by the liquid discharge head 10 to form the adhesive layer 127. After both the first carriage 40 and the second carriage 50 complete the main scanning operation, the control unit 200 controls the conveying mechanism 110 to perform a line feed to form the adhesive layer 127.

Although the scanning speeds and travel distances of the first carriage 40 and the second carriage 50 may differ, the timing of line feeding and scan start of the first carriage 40 and the second carriage 50 is preferably synchronized. The first carriage 40 and the second carriage 50 simultaneously start scanning from the same position in the main scanning direction X, for example.

Even if either the first carriage 40 or the second carriage 50 finishes scanning first, the first carriage 40 or the second carriage 50 whose scanning has been finished first enters a waiting state so that line feed and scanning can be started simultaneously.

### [OPERATION OF PRINTER SYSTEM 100 ACCORDING TO EMBODIMENT]

Next, an example of the operation of the printer system 100 according to the present embodiment will be described.

The CPU 201 reads and analyzes the print data in the reception buffer of the host I/F 209, performs necessary image processing and data rearrangement processing in the ASIC 205, and transfers the data to the print control unit 206.

The print control unit 206 outputs the image data and the drive waveform to the head driver 240 at a required timing. More specifically, the print control unit 206 generates a drive waveform composed of one drive pulse or a plurality of drive pulses by D/A converting and amplifying pattern data of the drive pulse stored in the ROM 202 and read out by the CPU 201.

Note that the generation of the image data for outputting the image may be performed by storing font data and image processing data in the ROM 202, for example, or the image data may be developed into a bitmap by a host-side printer driver or RIP (Raster Image Processor) software and transferred to the printer system 100.

Based on the input image data, the head driver 240 selectively applies the drive pulses included in the drive waveform supplied from the print control unit 206 to the pressure generator (piezoelectric element) of the liquid discharge head 10, which drives the liquid discharge head 10.

The coating control unit 206B outputs the coating data to the driver 240B at a required timing.

Upon waking from sleep mode, the heater unit 70 is turned on and controlled to a set temperature corresponding to the type of thermal transfer film 120 and the printing mode. When the heater unit 70 stands up, the printer system 100 enters a state in which a print-receiving surface can be formed and starts an initial operation for forming the print-receiving surface.

The thermal transfer film 120 is conveyed in the sub-scanning direction Y, and an image is formed by discharging ink from the liquid discharge head 10. The thermal transfer film 120 may be, for example, a roll type or a sheet type.

The thermal transfer film 120 is conveyed in the sub-scanning direction Y, and the first carriage 40 moves in the main scanning direction X to form an image. When the film is conveyed and the adhesive application area reaches below the second carriage 50, the second carriage 50 moves in the main scanning direction X in accordance with the operation timing of the first carriage 40, and an adhesive layer is formed on the printed surface.

In the case of forming an image, the number of scans is changed in accordance with the resolution of the image to be formed, so that a high-resolution image can be formed.

### [PROCEDURE FOR GENERATING PRINTED IMAGE DATA AND ADHESIVE LIQUID COATING DATA]

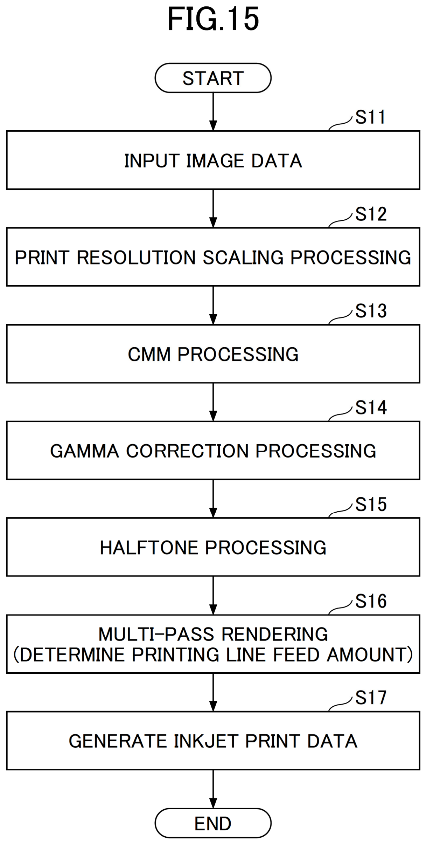

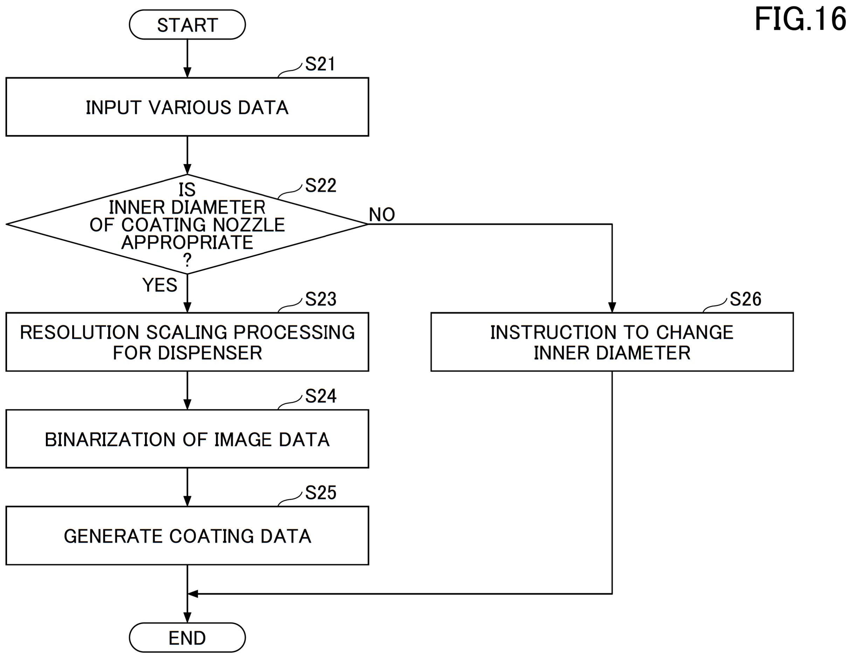

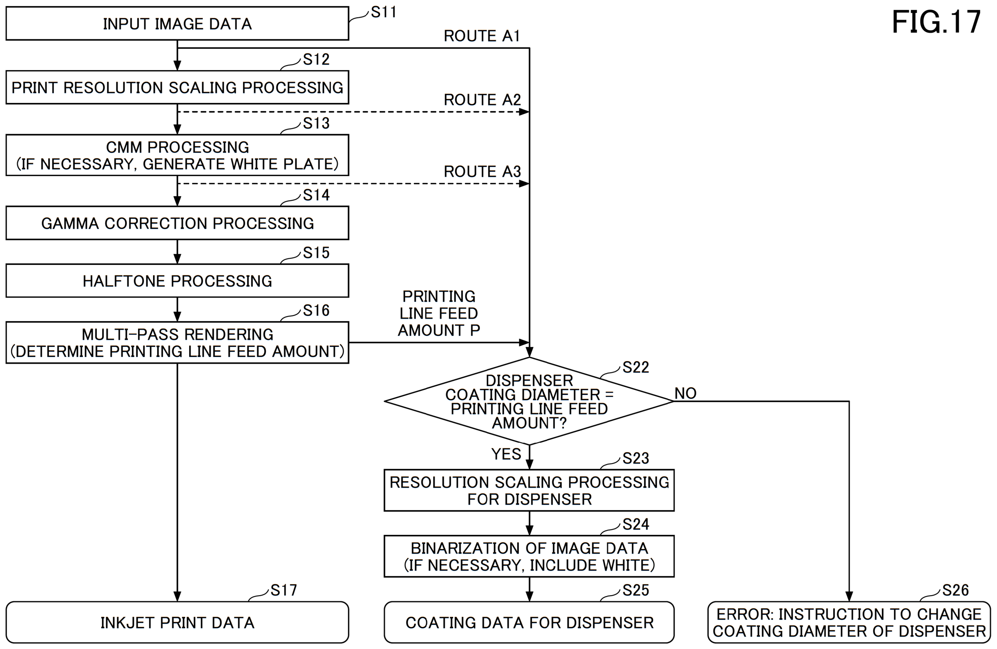

FIGS. 15 and 16 are flowcharts illustrating procedures for generating printed image data and coating data for an adhesive liquid. FIG. 17 is a flowchart illustrating a procedure for generating coating data for applying an adhesive liquid using the dispenser unit 20.

The coating data in the dispenser unit 20 is generated from input image data in the same manner as the image printer data of the liquid discharge head 10. The term "image printer data" refers to data for image printing necessary for forming an image. However, unlike color ink data and white ink data for image printing, the application of the adhesive by the dispenser unit 20 does not require fine gradation expression or fine resolution. The "color ink data" may be color image data divided in the processes after step S13, or may be data used in step S17 concerning the discharge of color ink. The "white ink data" may be generated data of "white expression" and "white as a base" which are perform in parallel with processing of step S13, or may be print data in step S17 concerning the discharge of white ink.

As described above, the "coating data" is data for controlling the adhesive liquid to have a uniform thickness with a fixed line feed width W10 so as not to affect the printed image because the adhesive liquid is transparent or light milky white, and so as to entangle with the fabric in the entire range of the image. In this case, since the application width by the dispenser unit 20 is the same as the line feed width W10 of the printed image portion and is much larger than the print resolution of the printed image portion, resolution conversion different from the printed image data is required.

"The resolution conversion is required" means, specifically, that since the resolution of the input image is not necessarily the same as the print resolution, resolution conversion corresponding to the print resolution is required in processing of step S12. Furthermore, although the vertical and horizontal resolution ratio of the input image is basically 1 : 1, in order to obtain a desired image quality, the vertical and horizontal ratio of the print resolution may not be 1 : 1 depending on the setting of the printing mode. This print resolution in which the vertical and horizontal ratio is not 1:1 is referred to as "non-uniform resolution". In step S12, resolution conversion of "1 : 1" or "not 1 : 1" is performed. Image data to be printed using the liquid discharge head 10 is high-resolution data assuming multi-pass recording. Conversely, the data for forming the adhesive layer using the dispenser unit 20 is low-resolution data based on the coating diameter. Therefore, different scaling processing is required. The term "different scaling processing" may include, but is not limited to, uniform scaling in vertical and horizontal directions, non-uniform scaling in the vertical and horizontal directions, and scaling to a resolution different from that of the liquid discharge head 10.

The printing resolution of the printed image portion is, for example, 600dpi to 1200dpi, and the image pitch is 42 µm to 21 µm. The application width in the dispenser unit 20 depends on the conditions of multi-pass recording, but may be, for example, from an integer multiple of 4 mm to an integer multiple of 16 mm in the example illustrated in Table 1.

Print data processing in the liquid discharge head 10 is generally known. In the print data processing, when white ink printing is required as a white expression of an image or a base of a printed image portion as a DTF transfer film for a color fabric, white plate data is also generated as inkjet print data at the appropriate time. The "white plate data" may be print data related to the discharge of white ink.

Referring to FIG. 17, a procedure for generating coating data for applying the adhesive liquid using the dispenser unit 20 will be described. A flow of the procedure for generating the coating data may be referred to as a "coating data generation flow".

Original image data input for generating the coating data for the dispenser unit 20 may be performed at any stage in route A1, route A2, or route A3. In route A1, the image data input is performed after the processing of step S11 is performed. In route A2, the image data input is performed after the processing of step S12 is performed. In route A3, the image data input is performed after the processing of step S13 is performed. However, because the amount of data to be handled increases in the order of route A1, route A2, and route A3 due to resolution scaling and color conversion, route A1 is preferable. Since the image data in the case of route A1 is the image data before the resolution scaling, the data size of route A1 is smaller than the image data in the cases of route A2 and route A3.

The printer system 100 performs processes of steps S11 to S17 illustrated in FIG. 15. The printer system 100 inputs image data (step S11). The printer system 100 inputs image data (PDF, jpeg, BMP, TIFF, PNG files, etc.) to be printed on the host PC to, for example, a printer driver dedicated to the printer system 100 or RIP software. If the printer system 100 is equipped with a hardware image processing module such as an ASIC, the image data is input to the image processing module from the host PC via a network or an external storage medium.

Next, the printer system 100 performs a print resolution scaling processing (step S12). Since the image data input to the printer system 100 does not always coincide with the print resolution of the printer system 100, the control unit 200 scales the input image data according to the print resolution. The term "input image data" may be described as "input image data".

The printer system 100 performs CMM processing (step S13). The control unit 200 performs the CMM processing and generates white plate data as necessary. Since most input image data is based on an RGB color space, which differs from the CMYK color space of the color inks used in the printer system 100, color space conversion is performed using an ICC profile or the like.

In addition, although input image data based on the CMYK color system may be provided from the beginning, the CMYK in this case is CMYK based on an offset printing standard such as JapanColor or CRPC6, and does not match the CMYK of the inkjet ink, therefore the CMYK to cmyk conversion is performed using an ICC profile or the like.

White ink data may be generated based on either the RGB color system or the CMYK color system because white ink data may be generated under an AND condition with color data (white ink is printed under color) when the white ink data is formed as a color ink underlayer. At this time, the control unit 200 may adjust the gradation of the white ink or may fix the gradation of the white ink in accordance with the color to be printed on the underlayer.

As for "white ink" other than the base, there are image data when all "white ink" on the image is targeted (image data of case 1), and image data when "a place where white ink is desired to be printed" and "a place where nothing is desired to be printed" are distinguished (image data of case 2).

In the case of processing the image data of Case 1 (the former), the operator is required to select whether to process using the printer driver 270, the RIP software, or the built-in image processing module (ASIC 205). In Case 1, even if the input image data includes an image area (including a transparent layer) in which color information is not included, all of the image areas are treated as "white" and white ink is applied. Therefore, there is no selection of "make white" or "do nothing", but "make white". In the case of processing the image data of Case 1 (the former), the operator selects "make white".

In the case of processing the image data of Case 2 (the latter), since a "do not print anything" area is designated as a "transparent layer", the control unit 200 generates "white" outside the "transparent layer" designated area as white ink data. The subsequent white ink processing is performed in the same manner as the color ink. In Case 2, when there is no area (transparent layer) where nothing is to be printed, the control unit 200 creates data as described above. However, in Case 2, when there is no transparent layer, the operator selects either "output white pixels as white" or "handle white pixels as transparent". The control unit 200 can automatically determine only when a transparent layer exists.

The printer system 100 performs gamma correction processing (step S14). As part of the gamma correction processing, the control unit 200 adjusts output levels for each ink discharged from the liquid discharge head 10, including color inks and white ink. This function is originally intended to fine-tune variations in color output among individual devices and changes due to aging; however, the adjustment may also be performed based on the operator's determination.

The printer system 100 performs halftone processing (step S15). Up to the processing of step S14, the amount of information per pixel of the image data ranges from 8 bits (256 gradations) to 16 bits (65,536 gradations). However, with inkjet discharge (using the liquid discharge head 10), only about 1 bit (binary) to 2 bits (four values) can be represented per one pixel. Therefore, the control unit 200 performs halftone processing as conversion processing to distribute high-bit information used upstream of step S15 over a plurality of pixels at the printing resolution, so that the information can be represented by low-bit discharge dots.

The printer system 100 performs multi-pass rendering (step S16). The printer system 100 determines the line feed width W10. In the multi-pass rendering, the control unit 200 divides the print resolution discharge data into a main scanning operation (pass) and a sub-scanning operation (interlace) according to the configuration of the liquid discharge head 10, and redistributes them as discharge data of the liquid discharge head 10. The line feed width W is uniquely determined by the multi-pass recording sequence at the current time.

For example, data concerning the configuration of the liquid discharge head 10 includes data such as a nozzle pitch and the number of nozzles. As an example, the nozzle pitch is 150 dpi, and the total number of nozzles is 378. The term "dpi" is an abbreviation for "dots per inch". In this configuration of the liquid discharge head 10, when print data at 600 dpi in the main scanning direction and 600 dpi in the sub-scanning direction is printed, the main scanning operation (pass), the sub-scanning operation (interlace), and the line feed width are as follows.

Number of interlaces required for the sub-scanning print resolution: $600 dpi = 150 dpi \times 4 interlacers$

When printing is performed with two main-scan passes, the line feed width W is calculated as follows: $\begin{matrix}W = \left(Total number of nozzles\right) / \left(\begin{matrix}Number of \\ passes \times Number of interlaces\end{matrix}\right) \\ = 378 nozzles / \left(2 passes\times 4 interlaces\right) \\ = 47 + 1 / 4 nozzles \\ = \left(47+1/4 nozzles\right) \times \left(1 inch/150 dpi\right) \\ = 8.001 mm\end{matrix}$

From the above, the line feed width W = 8 mm is determined. Since the line feed width W is uniquely determined when the multi-pass recording sequence is determined, the printer system 100 has line feed width information corresponding to the printing mode from the beginning.

The printer system 100 generates inkjet print data (step S17). In step S17, the control unit 200 temporarily packages the result of step S16 as a print data file. Packaging as a file is necessary so that data can be transferred from the host PC. Even when the print data is generated by the printer system 100 incorporating the image processing module (ASIC 205), the generation result is stored in the RAM 203 and can be repeatedly used by reading. The data is enlarged according to the print resolution. If the data is interrupted due to a memory overflow or the like in the middle of the processing, the print data is lost. In order to prevent this, packaging is required once as a break of completion.

After performing the processes illustrated in FIG. 15, the printer system 100 performs the processes of steps S21 to S25 illustrated in FIG. 16. If the system is capable of parallel processing, the processes of FIGS. 15 and 16 may be performed in parallel.

The printer system 100 inputs various data (step S21). Specifically, the control unit 200 inputs image data (route A1 illustrated in FIG. 17). Further, the control unit 200 may input image data after the processing of step S12 (route A2), or may input image data after the processing of step S13 (route A3). Further, the control unit 200 inputs data related to the line feed width W after the processing in step S16. Further, "line feed width" may be described as "line feed amount".

The printer system 100 accepts input of various data according to the usage. Examples of various data include the following data. The various data may be, for example, completely processed print data processed by the RIP software or unprocessed image data when the ASIC performs the processing after step S11 in FIG. 17. The printer system 100 may extract the processing parameters after step S11 in FIG. 17 from the ROM 202. The printer system 100 may accept the processing parameters after step S11 in FIG. 17 from an external device (a UI device such as a host PC or a control panel).

Further, "data relating to the coating diameter of the dispenser unit 20" is included as various data. The control unit 200 may read data relating to the coating diameter stored in the ROM 202, for example. The control unit 200 may input data relating to the coating diameter input by the operator. When performing printing, the operator may input data relating to the coating diameter by operating the input unit (control panel 220) of the printer system 100.

The printer system 100 determines whether or not the inner diameter of the coating nozzle is appropriate (step S22). The printer system 100 determines whether or not the inner diameter of the coating nozzle of the dispenser unit 20 is appropriate for the line feed width W10 of the inkjet print data. For example, the printer system 100 may determine that the inner diameter of the coating nozzle is appropriate when the inner diameter of the coating nozzle is the same as the line feed width W10 or when the inner diameter of the coating nozzle is within a certain range. When the inner diameter of the coating nozzle is appropriate, the printer system 100 performs the processing of step S23. When the inner diameter of the coating nozzle is not appropriate, the printer system 100 performs the processing of step S26.

In step S23, the printer system 100 performs resolution scaling processing for the dispenser unit 20.

In step S24, the printer system 100 performs binarization processing of the image data.

In step S25, the printer system 100 generates coating data.

In step S26, the printer system 100 performs an instruction to change the inner diameter of the coating nozzle of the dispenser unit 20. For example, the printer system 100 may display an instruction to change the inner diameter of the coating nozzle on a monitor. The user may replace the coating nozzle module 30 to change the size of the coating nozzle of the coating nozzle module 30 by observing the display on the monitor.

The printer system 100 may automatically change the inner diameter of the coating nozzle in step S26. The printer system 100 can rotate the coating nozzle module 30 to switch among the coating nozzles 31C, 31D, and 31E. If the printer system 100 has an automatic rotation mechanism, the switching among the coating nozzles 31C, 31D, and 31E can be performed automatically. The printer system 100 may also open and close the coating nozzles 31G to 31J. The printer system 100 may partially close the coating nozzles to change the inner diameter of the coating nozzles.

In the above-described procedure, the determination processing of step S22 is performed after performing step S16 based on the result of the multi-pass rendering process, but the determination processing of step S22 may be performed before performing the processing of step S16. For example, when the user designates the printing mode, the printer system 100 may determine the line feed width W10 based on the printing mode before performing step S16.

### [EFFECTS OF PRINTER SYSTEM 100 ACCORDING TO EMBODIMENT]

The printer system 100 according to the embodiment is an inkjet DTF printer system 100 which forms an image by discharging ink onto a thermal transfer film (resin film) 120 having the release layer 123 and the ink-receiving layer 124, and forms an adhesive layer 127 on the image, which produces a thermal transfer film original, and is provided with a liquid discharge head (liquid discharger) 10 which discharges ink onto the thermal transfer film 120, a non-inkjet type dispenser unit 20 which has an coating nozzle 31 for discharging an adhesive liquid and applies the adhesive liquid onto the image by discharging the adhesive liquid from the coating nozzle 31, the first carriage 40 on which the liquid discharge head 10 is mounted and moves the liquid discharge head 10 in the main scanning direction X, the second carriage 50 on which the dispenser unit 20 is mounted and moves the dispenser unit 20 in the main scanning direction X, a conveying mechanism (conveyor) 110 which conveys the thermal transfer film 120 in the sub-scanning direction Y intersecting the main scanning direction X, and the control unit 200 which controls the operations of the liquid discharge head 10, the dispenser unit 20, the first carriage 40, the second carriage 50, and the conveying mechanism (conveyor) 110. The control unit 200 controls the movement of the second carriage 50 so that the main scanning start timing for performing the liquid discharge operation by the liquid discharge head 10 and the line feed timing in the sub-scanning after the main scanning is completed are synchronized, and the coating operation by the dispenser unit 20 is performed to form the adhesive layer 127. The control unit 200 controls the movement of the second carriage 50 so that the main scanning start timing by the liquid discharge head 10 and the line feed timing in the sub-scanning after the main scanning is completed are synchronized. The control unit 200 controls the conveying mechanism 110 to perform line feed after both the first carriage 40 and the second carriage 50 complete the main scanning operation, and forms the adhesive layer 127.

In the printer system 100 of such a type, by providing the non-inkjet-type dispenser unit 20, a high-viscosity adhesive liquid can be applied onto an image (printed surface). In the printer system 100, the timing of starting scanning of the first carriage 40 mounting the liquid discharge head 10, the timing of starting scanning of the dispenser unit 20, and the timing of line feed can be synchronized.

Specifically, the timing of line feed being synchronized means that both the liquid discharge head 10 and the dispenser unit 20 have completed the main scanning operation and are ready to enter the line feed operation. In the printer system 100, the adhesive liquid can be applied on the ink in conjunction with the discharge operation. Since scanning is not performed at the same part of the image area, the timing of starting the main scanning operation by the first carriage 40, the timing of starting the main scanning operation by the second carriage 50, and the timing of line feed is preferably aligned. Even if the main scanning operation of either the first carriage 40 or the second carriage 50 is completed first, the first carriage 40 or the second carriage 50, which has completed the main scanning operation first, waits for the completion of operating the first carriage 40 or the second carriage 50 so that line feed and scanning can be started at the same time.

In the printer system 100, the inner diameter of the coating nozzle 31 may be the same size as the line feed width W10 based on the multi-pass recording method by the liquid discharge head 10. In such a printer system 100, by setting the inner diameter of the coating nozzle 31 and the line feed width W10 to be the same size, the ink discharge operation, the adhesive liquid coating operation, and the timing of line feed are readily to be synchronized.

When the coating diameter is greater than the line feed width W, some devices for masking the range exceeding the line feed width W are required, and when such devices are not provided, a significant mismatch occurs between the printed image and the adhesive application area. Since excessive overflow of the adhesive layer may be perceived as a defect in an image after DTF transfer, it is undesirable for the coating diameter to be greater than the line feed width W. In the printer system 100, by making the inner diameter (coating diameter) of the coating nozzle 31 and the line feed width W10 the same size, it is easy to synchronize the ink discharge operation, the adhesive liquid coating operation, and the line feed timing.

When the coating diameter is smaller than the line feed width W, the dispenser unit 20 is also required to move in the sub-scanning direction Y in order to cover the insufficient application area. Furthermore, the dispenser unit 20 is also required to perform a main scanning operation faster than that of the liquid discharge head 10. This increases cost and greatly affects productivity. If the insufficient application area is not covered, the adhesive layer required for transfer cannot be formed. Therefore, it is not preferable that the coating diameter is smaller than the line feed width W. In the printer system 100, by making the inner diameter (coating diameter) of the coating nozzle 31 and the line feed width W10 the same size, it is easy to synchronize the ink discharge operation, the adhesive liquid coating operation, and the line feed timing.

In the printer system 100, the control unit 200 can control the coating operation based on the coating data generated with a resolution corresponding to the inner diameter of the coating nozzle 31. The dispenser unit 20 can form the adhesive layer 127 by applying the adhesive liquid based on the coating data.

In the printer system 100, the control unit 200 can control the coating operation based on the coating data generated with a resolution corresponding to the opening width in the sub-scanning direction Y of the coating nozzle 31. The dispenser unit 20 can form the adhesive layer 127 by applying the adhesive based on the coating data generated with a resolution corresponding to the opening width in the sub-scanning direction Y. If the coating diameter is much larger than the image resolution, increasing the resolution to match the image resolution does not allow the resolution capability to be fully utilized. In the printer system 100, the load of the coating data generation processing can be reduced by reducing the resolution of the coating data to match the coating diameter.

In the printer system 100, the dispenser unit 20 may have a reservoir 26a for storing the adhesive liquid, and coating nozzle modules 30A and 30B formed with coating nozzles 31A and 31B and attachable to and detachable from the reservoir 26a. The liquid discharge head 10 includes the coating nozzle module 30A formed with the coating nozzle 31A, and the coating nozzle module 30B formed with the coating nozzle 31B, and the inner diameter of the coating nozzle can be changed by replacing the coating nozzle module 30A and the coating nozzle module 30B. In the printer system 100, the inner diameter of the coating nozzle 31 can be changed according to the printing mode.

Generally, the line feed width is increased in the printing mode of high productivity, and the line feed width is decreased in the printing mode of high image quality. In the printer system 100, coating nozzles corresponding to various printing modes can be provided, which enables the system to meet a variety of user needs. In the printer system 100, the coating nozzle can be changed according to the printing mode, and printing can be performed without being affected by the quality of the fabric on which the DTF transfer is performed.

The dispenser unit 20 has a rotating mechanism for rotating the non-circular coating nozzles 31C to 31E, and by rotating the coating nozzles 31C to 31E, the opening width of the coating nozzles 31C to 31E in the sub-scanning direction Y can be changed to the same size as the line feed width W10. In the printer system 100, the line feed width W10 can be changed according to the printing mode, and the opening width of the coating nozzle in the sub-scanning direction Y can be changed according to the change of the line feed width W10.

In the case of a rectangular coating nozzle as illustrated in FIG. 10, two types of application widths can be achieved by using the long side and the short side without changing the coating nozzle. Further, if an intermediate angle is provided by rotation, a coating width between the widths of the long side and the short side can be achieved. For example, the coating nozzle can be rotated by automatic control using a motor. Alternatively, the operator may manually rotate the coating nozzle. For example, a mark indicating the rotation position may be inscribed on the outer peripheral surface of the coating nozzle module so that the rotation position of the coating nozzle can be readily set.

In the printer system 100, the dispenser unit 20 has a plurality of coating nozzles 31G to 31J arranged at different positions in the sub-scanning direction Y, the inner diameter of the coating nozzles 31G to 31J is 1/n of the line feed width W10, where n is a natural number equal to or greater than 2, and the plurality of coating nozzles 31G to 31J can be selectively opened or closed in accordance with the line feed width W10. "n" may be, for example, "4". In the printer system 100, the opening widths R11, R12, and R13 can be switched in accordance with the printing mode.

Since the printer system 100 has a plurality of coating nozzles that can be selectively opened and closed, a desired coating width can be achieved without having to rotate each of the coating nozzles. In the case of a rotary coating nozzle as illustrated in FIG. 10, the coating thickness varies depending on the direction of the coating nozzle. In terms of body structure, the coating thickness is thickened in the direction of a small diameter, and the coating thickness is thinned in the direction of a large diameter. When the coating thickness is controlled by the number of coating nozzles, the coating thickness can be kept constant regardless of the number of coating nozzles used.

In the printer system 100, the dispenser unit 20 has a plurality of coating nozzles 31G to 31J arranged at different positions in the sub-scanning direction Y, and the coating data may be generated with a resolution based on the inner diameter of one coating nozzle 31 with respect to the sub-scanning direction Y. The data generation unit of the control unit 200 can generate the coating data with a resolution based on the inner diameter of the coating nozzle 31. The dispenser unit 20 can select the coating nozzles 31G to 31J from which the adhesive liquid is discharged based on the coating data, and can change the width to which the adhesive liquid is applied in accordance with the line feed width W10.

Furthermore, by generating the coating data with a resolution based on the inner diameter of one coating nozzle in the printer system 100, the application range can be set for each coating nozzle, and the adhesive layer can be applied with higher accuracy.

As illustrated in FIG. 11, in the configuration having a plurality of coating nozzles 31G to 31J, not only can the application width in the sub-scanning direction Y be adjusted according to the number of coating nozzles (effective openings) from which the adhesive liquid can be discharged, but also by controlling the opening and closing (ON/OFF) of the coating nozzles, the application area in the main scanning direction X can be controlled for each coating nozzle (opening).

Since the printer system 100 according to the embodiment includes the dispenser unit 20, applying the hot-melt powder to the printed surface is not required. Therefore, different from related DTF printing systems, a shaker is not necessarily included. Therefore, the printer system 100 provides excellent operability and environmental performance, and smoothly synchronizes image printing by the liquid discharge head 10 with the formation of the adhesive layer 127 by the dispenser unit 20, enabling high-productivity roll-to-roll printing.

### [ADHESIVE LIQUID]

The adhesive liquid discharged from the dispenser unit 20 may be, for example, a thermoplastic rubber-based material. The thermoplastic rubber-based material may include, for example, one or more of a thermoplastic polyurethane elastomer (TPU), a thermoplastic elastomer (TPE), a thermoplastic polyester elastomer (TPC), poly(butylene-adipate-co-terephthalate) (PBAT), and an acrylic elastomer. The viscosity of the adhesive liquid is, for example, 30 Pa·s (approximately as viscous as mayonnaise). In the dispenser unit 20 illustrated in FIGS. 5 to 7, an adhesive liquid having a high viscosity of approximately 1 to 100 Pa·s can be applied on an image.

### [IMAGE FORMING METHOD ACCORDING TO EMBODIMENT]

The image forming method according to the embodiment forms a thermal transfer film original by discharging ink on a thermal transfer film (resin film) 120 as a recording medium to form an image and forming the adhesive layer 127 on the image, and includes a first moving process for moving the first carriage 40 on which a liquid discharge head 10 for discharging ink is mounted in the main scanning direction X, a second moving process for moving the second carriage 50 mounted with a non-inkjet type dispenser unit 20 for applying an adhesive liquid in the main scanning direction X, a liquid discharge process for discharging ink from the liquid discharge head 10 onto the thermal transfer film 120 while performing the first moving process, and an adhesive application process for discharging the adhesive liquid from the coating nozzle 31 of the dispenser unit 20 and applying the adhesive liquid on the image while performing the second moving process.

In the image forming method, the movement start timing of the liquid discharge head 10 in the first moving process and the movement start timing of the dispenser unit 20 in the second moving process are synchronized, and after the liquid discharge process and the adhesive application process are performed, the thermal transfer film 120 is conveyed in a line feed operation. In the image forming method, after both the first carriage 40 and the second carriage 50 complete the main scanning operation, the conveying mechanism 110 is controlled to perform a line feed operation to form the adhesive layer 127.

### [PROBLEMS IN THE RELATED ART]

The related adhesive layer formation using hot-melt powder can provide a very strong adhesive effect in terms of image durability; however, because it employs a difficult-to-handle powder material and requires a large-scale apparatus such as a shaker, there has long been a demand for powderless approaches.

### [PROBLEMS DUE TO USE OF HOT-MELT POWDER (SHAKER)]

The shaker itself has a large body size, which poses a challenge. Although the large-format inkjet apparatus itself has a shallow depth and therefore does not require much space, connecting a shaker requires a considerable footprint in the depth direction.

The operating noise of the shaker is large, which poses a challenge. Since the powder is removed by physical vibration, noise such as a continuous striking sound is generated.

The hot-melt powder is scattered in the shaker, which poses a challenge. There is a mechanism for reusing powder that is scattered onto non-image areas and then removed. However, powder tends to disperse within the apparatus and adhere to various units, which necessitates frequent cleaning. As used herein, the term "inside the apparatus" may refer to the interior of a housing of the apparatus.

Odor during heating and melting poses a challenge. Unpleasant odor is generated because resin is heated and melted. Ventilation ducts to release the odor are required.

### [POWDERLESS INK]

One of the earliest approaches to achieving powderless processing is the development of powderless ink.

The main component of the hot-melt powder is polyurethane, polyester, polyamide, ethylene-vinyl acetate resin, and the like, and an inkjet ink including these resin components is used to produce a printing ink having an adhesive function.

However, in order to produce an ink that can be discharged from an inkjet head, the resin content of the ink is required to be significantly limited. In an ordinary inkjet ink, the resin content is at most about 10% by weight of the whole ink, and when the content exceeds 20%, discharge stability and high-frequency discharge capability are remarkably degraded.

When the prescription level of an ordinary inkjet ink (for example, less than 10% by weight) is used, the ink exhibits Newtonian fluid characteristics and does not affect discharge from an inkjet head.

However, as the ratio of the amount of resin used as an adhesive increases, the ink gradually exhibits non-Newtonian fluid characteristics and cannot be discharged properly from an inkjet head.

In recent years, there have been studies on inkjet head structures capable of discharging high-viscosity liquids, and valve jet heads utilizing the high pressure of a compressor. However, they cannot be easily incorporated into a large-format inkjet printer used for DTF because of differences in cost and scale.

Powderless ink can contain only a resin content that is acceptable for inkjet ink, and can form only a "thin adhesive layer". In the "thin adhesive layer", the fixing property of the printed image when transferred to the fabric is also low, and the transferred image is readily damaged or peeled off when subjected to physical stress caused by wearing or washing.

Although there is an idea that a thick adhesive layer can be formed by repeatedly applying an adhesive liquid with a low resin content, the base material film itself, which is the base of the DTF film, has poor ink-receiving power (i.e., water-receiving power), and even if the ink-receiving layer is provided, the ink-receiving power of plain paper or inkjet coated paper cannot be expected at all. The adhesive liquid overflowing from the ink-receiving layer spills from the side of the roll transfer, and soils the print-receiving surface side of the DTF film including the printed image portion. Here, the term "printed image portion" refers to an image portion printed on the DTF film by an inkjet head.

Further, the present invention is not limited to these embodiments, but various variations and modifications may be made without departing from the scope of the present invention.

Each of the functions performed by the control unit 200 of the embodiments described above can be achieved by one or more processing circuits. Here, the term "processing circuit" as used herein includes a processor programmed to execute each of the functions by software, such as a CPU implemented by an electronic circuit, and devices such as an ASIC (Application Specific Integrated Circuit), a DSP (digital signal processor), an FPGA (field programmable gate array) and related circuit modules designed to execute each of the functions described above.

One aspect of the present invention may be as follows.
<1> An inkjet direct to film (DTF) printer system for producing a thermal transfer film original by forming an image by discharging ink onto a thermal transfer film and forming an adhesive layer on the image, including:
   a liquid discharger configured to discharge the ink onto the thermal transfer film;
   a dispenser unit which is a non-inkjet type, including a coating nozzle configured to discharge an adhesive liquid, and configured to apply the adhesive liquid on the image by discharging the adhesive liquid from the coating nozzle;
   a first carriage on which the liquid discharger is mounted, the first carriage being configured to move the liquid discharger in a main scanning direction;
   a second carriage on which the dispenser unit is mounted, the second carriage being configured to move the dispenser unit in the main scanning direction;
   a conveyor configured to convey the thermal transfer film in a sub-scanning direction intersecting the main scanning direction; and
   a control unit configured to control operations of the liquid discharger, the dispenser unit, the first carriage, the second carriage, and the conveyor,
   wherein the control unit is configured to form the adhesive layer by controlling the conveyor to perform a line feed after both the first carriage and the second carriage have finished a main scanning operation.
<2> The inkjet DTF printer system according to <1>, wherein an inner diameter of the coating nozzle has a same size as a line feed width based on a multi-pass recording method using the liquid discharger.
<3> The inkjet DTF printer system according to <2>, wherein the control unit is configured to control a coating operation by the dispenser unit based on coating data generated with a resolution corresponding to the inner diameter of the coating nozzle.
<4> The inkjet DTF printer system according to <3>, wherein the control unit is configured to control the dispenser unit based on the coating data generated with a resolution corresponding to an opening width of the coating nozzle in the sub-scanning direction.
<5> The inkjet DTF printer system according to any one of <2> to <4>, further including:
   a reservoir configured to store the adhesive liquid; and
   a coating nozzle module formed with the coating nozzle and attachable to and detachable from the reservoir.
<6> The inkjet DTF printer system according to any one of <2> to <4>, wherein:
   the dispenser unit includes a rotating mechanism configured to rotate the coating nozzle, the coating nozzle being non-circular, and
   an opening width of the coating nozzle in the sub-scanning direction can be changed to a size same as the line feed width by rotating the coating nozzle.
<7> The inkjet DTF printer system according to any one of <2> to <5>, wherein:
   the dispenser unit includes the plurality of coating nozzles disposed at respective different positions in the sub-scanning direction,
   an inside diameter of the coating nozzle is 1/n of the line feed width,
   the n is a natural number equal to or greater than two, and
   each of the plurality of coating nozzles is selectively opened or closed according to the line feed width.
<8> The inkjet DTF printer system according to <7>, wherein:
   the dispenser unit includes the plurality of coating nozzles disposed at respective different positions in the sub-scanning direction, and
   the coating data is generated with the resolution based on one of inner diameters of the coating nozzles with respect to the sub-scanning direction.
<9> The inkjet DTF printer system according to any one of <3> to <8>, wherein when a difference between an inside diameter corresponding to the coating nozzle and the line feed width is greater than a determination threshold, the control unit is configured to notify that a combination of the inner diameter of the coating nozzle and the line feed width is not appropriate.
<10> The inkjet DTF printer system according to any one of <3> to <9>, wherein when a difference between an inside diameter corresponding to the coating nozzle and the line feed width is greater than a determination threshold, the control unit is configured to change a coating width by controlling:
   a rotation mechanism capable of changing a direction of the coating nozzle, or
   a switching mechanism configured to switch a number of the coating nozzles to be used.
<11> The inkjet DTF printer system according to any one of <1> to <10>, wherein the adhesive liquid includes a thermoplastic rubber-based material.
<12> The inkjet DTF printer system according to <11>, wherein the thermoplastic rubber-based material includes at least one of:
   a thermoplastic polyurethane elastomer (TPU);
   a thermoplastic elastomer (TPE);
   a thermoplastic polyester elastomer (TPC);
   poly(butylene-adipate-co-terephthalate) (PBAT); and
   an acrylic elastomer.
<13> A method for producing a thermal transfer film original by forming an image by discharging ink onto a thermal transfer film and forming an adhesive layer on the image, including:
   moving a first carriage in a main scanning direction, a liquid discharger configured to discharge the ink is mounted on the first carriage;
   moving a second carriage in the main scanning direction, a dispenser unit which is a non-inkjet type and configured to apply the adhesive liquid is mounted on the second carriage;
   conveying the thermal transfer film by a conveyor in a sub-scanning direction intersecting the main scanning direction;
   discharging the ink from the liquid discharger onto the thermal transfer film during the moving of the first carriage;
   discharging the adhesive liquid from a coating nozzle of the dispenser unit to apply the adhesive liquid on the image during the moving of the second carriage; and
   forming the adhesive layer by controlling the conveyor to perform a line feed after both the first carriage and the second carriage have finished a main scanning operation.

### CITATION LIST

### [Patent document]

[Patent document 1] Japanese Unexamined Patent Application Publication No. 2024-54709

## Claims

1. An inkjet direct to film (DTF) printer system for producing a thermal transfer film original by forming an image by discharging ink onto a thermal transfer film and forming an adhesive layer on the image, comprising:
a liquid discharger configured to discharge the ink onto the thermal transfer film;
a dispenser unit which is a non-inkjet type, including a coating nozzle configured to discharge an adhesive liquid, and configured to apply the adhesive liquid on the image by discharging the adhesive liquid from the coating nozzle;
a first carriage on which the liquid discharger is mounted, the first carriage being configured to move the liquid discharger in a main scanning direction;
a second carriage on which the dispenser unit is mounted, the second carriage being configured to move the dispenser unit in the main scanning direction;
a conveyor configured to convey the thermal transfer film in a sub-scanning direction intersecting the main scanning direction; and
a control unit configured to control operations of the liquid discharger, the dispenser unit, the first carriage, the second carriage, and the conveyor,
wherein the control unit is configured to form the adhesive layer by controlling the conveyor to perform a line feed after both the first carriage and the second carriage have finished a main scanning operation.

2. The inkjet DTF printer system according to claim 1, wherein an inner diameter of the coating nozzle has a same size as a line feed width based on a multi-pass recording method using the liquid discharger.

3. The inkjet DTF printer system according to claim 2, wherein the control unit is configured to control a coating operation by the dispenser unit based on coating data generated with a resolution corresponding to the inner diameter of the coating nozzle.

4. The inkjet DTF printer system according to claim 3, wherein the control unit is configured to control the dispenser unit based on the coating data generated with a resolution corresponding to an opening width of the coating nozzle in the sub-scanning direction.

5. The inkjet DTF printer system according to claim 2 or 3, further comprising:
a reservoir configured to store the adhesive liquid; and
a coating nozzle module formed with the coating nozzle and attachable to and detachable from the reservoir.

6. The inkjet DTF printer system according to claim 2 or 3, wherein:
the dispenser unit includes a rotating mechanism configured to rotate the coating nozzle, the coating nozzle being non-circular, and
an opening width of the coating nozzle in the sub-scanning direction can be changed to a size same as the line feed width by rotating the coating nozzle.

7. The inkjet DTF printer system according to claim 3, wherein:
the dispenser unit includes a plurality of said coating nozzles disposed at respective different positions in the sub-scanning direction,
an inside diameter of the coating nozzle is 1/n of the line feed width,
the n is a natural number equal to or greater than two, and
each of the plurality of coating nozzles is selectively opened or closed according to the line feed width.

8. The inkjet DTF printer system according to claim 7, wherein:
the dispenser unit includes the plurality of coating nozzles disposed at respective different positions in the sub-scanning direction, and
the coating data is generated with the resolution based on one of inner diameters of the coating nozzles with respect to the sub-scanning direction.

9. The inkjet DTF printer system according to claim 3, wherein when a difference between an inside diameter corresponding to the coating nozzle and the line feed width is greater than a determination threshold, the control unit is configured to notify that a combination of the inner diameter of the coating nozzle and the line feed width is not appropriate.

10. The inkjet DTF printer system according to claim 3, wherein when a difference between an inside diameter corresponding to the coating nozzle and the line feed width is greater than a determination threshold, the control unit is configured to change a coating width by controlling:
a rotation mechanism capable of changing a direction of the coating nozzle, or
a switching mechanism configured to switch a number of the coating nozzles to be used.

11. The inkjet DTF printer system according to claim 1 or 2, wherein the adhesive liquid includes a thermoplastic rubber-based material.

12. The inkjet DTF printer system according to claim 11, wherein the thermoplastic rubber-based material includes at least one of:
a thermoplastic polyurethane elastomer (TPU);
a thermoplastic elastomer (TPE);
a thermoplastic polyester elastomer (TPC);
poly(butylene-adipate-co-terephthalate) (PBAT); and
an acrylic elastomer.

13. A method for producing a thermal transfer film original by forming an image by discharging ink onto a thermal transfer film and forming an adhesive layer on the image, comprising:
moving a first carriage in a main scanning direction, a liquid discharger configured to discharge the ink being mounted on the first carriage;
moving a second carriage in the main scanning direction, a dispenser unit which is a non-inkjet type and configured to apply the adhesive liquid being mounted on the second carriage;
conveying the thermal transfer film by a conveyor in a sub-scanning direction intersecting the main scanning direction;
discharging the ink from the liquid discharger onto the thermal transfer film during the moving of the first carriage;
discharging the adhesive liquid from a coating nozzle of the dispenser unit to apply the adhesive liquid on the image during the moving of the second carriage; and
forming the adhesive layer by controlling the conveyor to perform a line feed after both the first carriage and the second carriage have finished a main scanning operation.
